# FASCICULE DE BREVET EUROPEEN

(11) **EP 3 895 188 B1**
(45) Date de publication et mention de la délivrance du brevet: **13.08.2025**
(21) Numéro de dépôt: 19839401.7
(22) Date de dépôt: 12.12.2019
(51) Int. Cl.: H01F 7/02, H01F 41/02, H01F 41/30

(54) **PROCÉDÉ DE FABRICATION D'UN AIMANT PERMANENT OU DOUX**
VERFAHREN ZUR HERSTELLUNG EINES WEICH- ODER PERMANENTMAGNETEN
METHOD FOR PRODUCING A SOFT OR PERMANENT MAGNET

(30) Priorité: 14.12.2018 FR 1872920
(43) Date de publication de la demande: 20.10.2021
(73) Titulaire: Institut National des Sciences Appliquées, 31000 Toulouse (FR); Université Paul Sabatier Toulouse III, 31062 Toulouse Cedex 9 (FR); Centre National de la Recherche Scientifique, 75016 Paris (FR)
(72) Inventeur: LACROIX, Lise-Marie, 31077 Toulouse Cedex 4 (FR); VIAU, Guillaume, 31077 Toulouse Cedex 4 (FR); LEICHLE, Thierry, 31031 Toulouse Cedex 4 (FR); MORITZ, Pierre, 31077 Toulouse Cedex 4 (FR)
(74) Mandataire: Germain Maureau
(86) Numéro de dépôt international: PCT/FR2019/053046
(87) Numéro de publication internationale: WO 2020/120913

(56) Documents cités:
- WO-A1-2004/088695
- US-A1- 2007 155 025
- WEIQING FANG ET AL: "Optimization of the magnetic properties of aligned Co nanowires/polymer composites for the fabrication of permanent magnets", JOURNAL OF NANOPARTICLE RESEARCH, vol. 16, no. 2, 21 January 2014 (2014-01-21), NL, XP055623521, ISSN: 1388-0764, DOI: 10.1007/s11051-014-2265-x
- SEMIH ENER ET AL: "Consolidation of cobalt nanorods: A new route for rare-earth free nanostructured permanent magnets", ACTA MATERIALIA., vol. 145, 1 February 2018 (2018-02-01), GB, pages 290 - 297, XP055623174, ISSN: 1359-6454, DOI: 10.1016/j.actamat.2017.12.009
- SOUMARE Y ET AL: "Kinetically controlled synthesis of hexagonally close-packed cobalt nanorods with high magnetic coercivity", ADVANCED FUNCTIONAL MATERIALS, WILEY - V C H VERLAG GMBH & CO. KGAA, DE, vol. 19, no. 12, 23 June 2009 (2009-06-23), pages 1971 - 1977, XP001522754, ISSN: 1616-301X, DOI: 10.1002/ADFM.200800822

## Description

L'invention concerne un procédé de fabrication d'un aimant permanent ou doux.

Un aimant permanent est un objet fabriqué dans un matériau ferromagnétique. Il possède une aimantation naturelle présente en l'absence de champ magnétique extérieur, ainsi qu'un champ coercitif et une rémanence élevés.

De nombreux microsystèmes électromécaniques ci-après dénommés « MEMS » (à savoir l'acronyme anglophone pour « micro electro mechanical system ») comportent des aimants permanents, l'ensemble formant des microsystèmes électromécaniques magnétiques, ci-après désignés avec l'abréviation « MAGMEMS ».

Les MAGMEMS peuvent être tout type de capteur et actionneur MEMS à transduction électromagnétique. Par exemple, il peut s'agir de capteur de champ magnétique, de collecteur d'énergie ou de relais.

Ces MAGMEMS sont utilisés dans des applications très variées :
- en microbiologie, notamment pour la séparation magnétique micro-fluidique (par exemple des biocapteurs),
- dans les télécommunications (par exemple les micro-interrupteurs radiofréquences),
- dans les capteurs automobiles.

En outre, les aimants permanents peuvent être utilisés dans des dispositifs magnéto-optiques tels que :
- les capteurs magnéto-optiques (par exemple les capteurs de fibres optiques, les capteurs rotatifs et les capteurs polarimètriques) ;
- les déflecteurs ;
- les modulateurs (par exemple les modulateurs hyperfréquences) ;
- les composants non réciproques (par exemple les isolateurs et les circulateurs).

Au vu de la multitude d'applications, les aimants permanents sont devenus des objets incontournables de la vie quotidienne et représentent ainsi un marché conséquent et porteur d'avenir.

Jusqu'à encore récemment, la principale source des matériaux des aimants permanents étaient les alliages à base de terres rares (par exemple le scandium, l'yttrium et les 15 lanthanides comme le néodyme et le samarium) qui présentent l'avantage de fournir les meilleures performances magnétiques. Un exemple très connu d'aimant permanent à base de terre rare est l'aimant NdFeB, aussi dénommé « aimant Neo » qui est composé d'un alliage de néodyme (Nd), de fer (Fe) et de bore (B).

Cependant, l'extraction des terres rares est difficile et pose des problèmes environnementaux. C'est pourquoi, la tendance actuelle est de s'affranchir de ces matériaux et de chercher des matériaux de substitution qui sont aussi performants.

En outre, le procédé de fabrication des aimants permanents à partir des terres rares est complexe. A titre d'exemple, la fabrication d'un aimant NdFeB nécessite les étapes suivantes : fonte, puis meulage des matières premières ou décrépitation à l'hydrogène, moulage dans un champ magnétique et frittage. Ensuite, les ébauches d'aimants doivent être usinées et polies jusqu'à l'obtention de la taille et la forme souhaitées. Enfin, un traitement de surface, par exemple par galvanisation de manière à revêtir l'aimant d'une couche nickel-cuivre-nickel, est nécessaire afin d'éviter que l'aimant ne s'oxyde et ne se décompose en poussières. Aussi, les limites de la réalisation de l'usinage ne permettent pas d'obtenir des tailles d'aimants permanents qui sont appropriées pour des applications de micro-électronique.

De plus, ce procédé de fabrication requiert une température de 1000 °C et de hautes pressions qui ne sont pas compatibles avec les étapes de production de MEMS. Cela nécessite alors de fabriquer de manière séparée l'aimant du reste du MEMS, puis de l'intégrer au sein du MEMS : ce qui est fastidieux à mettre en œuvre dans des chaînes de production et nécessite que l'aimant présente une échelle macroscopique. En effet, les aimants à l'échelle microscopique ne peuvent pas être aisément intégrés de cette manière à des MEMS : cela nécessite des étapes de manipulation très complexes.

Par ailleurs, les hexaferrites de baryum et de strontium constituent la source la moins chère en matériau d'aimant permanent. Cependant, du fait d'une plus faible aimantation, elles ne sont pas aussi performantes au niveau magnétique que les aimants permanents à base de terre rare.

C'est pourquoi, on est toujours à la recherche de nouveaux matériaux d'aimants permanents :
- dépourvus de terres rares, et qui en outre
- présentent de bonnes propriétés magnétiques,
- puissent être fabriqués à faibles coûts et aisément dans des chaînes de production, et
- puissent être intégrés dans des MEMS ou des dispositifs magnéto-optiques tels que détaillés ci-dessus au cours de la production de ces MEMS et dispositifs. Cela nécessite que leur intégration s'effectue à basse température et de manière compatible avec une production de masse,
- présentent un dimensionnement approprié (à savoir notamment une échelle microscopique) pour une intégration possible en chaîne de production au cours de la fabrication des MEMS et des dispositifs magnéto-optiques.

Dans le domaine de la micro-technologie, différentes techniques sont connues pour fabriquer des aimants permanents sous la forme de couches magnétiques sur un substrat.

Parmi ces techniques, on peut citer :
- le dépôt par ablation laser (connu aussi sous la dénomination anglophone « Pulsed Laser Deposition ») qui permet l'obtention d'une couche magnétique d'une épaisseur maximale de 10 à 20 µm avec une quantité d'énergie magnétique BHmax de 130 kJ/m³. Cependant, la température de mise en œuvre de cette technique est de 700°C ; ce qui n'est pas compatible avec les MEMS.
- la pulvérisation qui permet l'obtention d'une couche magnétique présentant une quantité d'énergie magnétique BHmax de 400 kJ/m³ mais qui nécessite également une température de recuit comprise entre 400°C-700°C incompatible avec les MEMS et qui présente des limitations quant à l'épaisseur atteignable : de l'ordre de quelques micromètres, et au maximum 50 µm. Ainsi, des épaisseurs supérieures, par exemple de l'ordre de 100-1000 µm ne sont pas concevables avec cette technique, et ce alors qu'elles sont très recherchées pour des MEMS, par exemple pour créer une déflection.
- l'encapsulation de poudre isotrope dans une matrice polymérique. Le polymère résultant peut ensuite être mis en forme par moulage, filage ou sérigraphie. Cela permet l'obtention d'une couche magnétique d'une épaisseur maximale de 400 µm avec une quantité d'énergie magnétique BHmax de 53 kJ/m³. Cependant, la dilution importante des poudres magnétiques dans le polymère conduit à une baisse significative des propriétés macroscopiques de l'aimant obtenu. De plus, le procédé de déposition par sérigraphie classiquement utilisé pose des problèmes pour une industrialisation à large échelle. En outre, des difficultés d'homogénéité de la poudre magnétique au sein de la matrice peuvent survenir. Tous ces inconvénients limitent ainsi l'intérêt de cette technique.
- le dépôt physique par phase vapeur (connu sous l'acronyme anglophone de « PVD » pour « Physical Vapor Deposition ») qui permet l'obtention d'une couche magnétique d'une épaisseur maximale de 10 µm avec une quantité d'énergie magnétique BHmax de 120 kJ/m³. Cette technique n'est pas pleinement satisfaisante pour certaines applications, du fait de la limitation de l'épaisseur de la couche magnétique à seulement 10 µm.
- l'électrodéposition, qui est une technique compatible avec les MEMS mais qui donne des matériaux dont la microstructure n'est pas optimisée pour les aimants permanents, et dont le BHmax est limité à 30 kJ/m³.

Ainsi, outre le fait que ces différentes techniques peuvent, pour certaines d'entre elles (notamment la pulvérisation), être coûteuses à mettre en œuvre, elles ne sont pas toujours pleinement satisfaisantes en ce qui concerne l'épaisseur des couches magnétiques obtenues et/ou leurs propriétés magnétiques pour des applications variées dans la micro-technologie ainsi que, le cas échéant, du fait de l'incompatibilité de leur procédé d'obtention avec des MEMS.

Un aimant doux (ou soft magnet en anglais) se distingue d'un aimant permanent par le fait qu'il présente un faible champ coercitif tout en ayant une forte aimantation à saturation.

Les aimants doux peuvent être utilisés en microélectronique, dans les composants à hautes fréquences, tels que les inductances, les filtres de mode commun, ou encore les transformateurs radiofréquences, qui comprennent généralement des matériaux magnétiques.

L'intérêt de former des aimants doux à base de nanoparticules sphériques est entre autres la possibilité d'avoir des matériaux avec des propriétés dans le domaine des hautes fréquences (>GHz) car leur diamètre est inférieur à l'épaisseur de peau (qui diminue lorsque la fréquence augmente).

Des assemblées denses de nanoparticules sphériques constituées d'un matériau doux (Fe, FeCo, FeNi, FeC, FeN ...) sont intéressantes car elles présentent à la fois une forte aimantation (liée à la nature des particules et à leur fraction volumique dans l'assemblée) et des fortes susceptibilités magnétiques dans le domaine des hyperfréquences.

Par « matériau doux », on entend au sens de la présente demande un objet fabriqué dans un matériau ferromagnétique qui présente une forte susceptibilité magnétique à la fréquence désirée et une forte aimantation à saturation.

Ainsi, comme pour les aimants permanents, les aimants doux sont devenus des objets incontournables de la vie quotidienne et représentent un marché conséquent et porteur d'avenir.

Une technique de fabrication d'un aimant doux connue est celle consistant à déposer des matériaux composites en couches minces par sputtering ou électrodéposition. Toutefois, cette technique présente des limites non négligeables du fait en particulier des pertes dues aux courants de Foucault, des contraintes thermiques et de pression, de la faible teneur magnétique et de leur report, usuellement effectué par technique pick-and-place.

Ainsi, les techniques de fabrication des aimants doux connues ne sont pas toujours satisfaisantes en ce qui concerne la densité du matériau magnétique obtenu et/ou en ce qui concerne leur compatibilité avec des techniques de micro-fabrication.

Par ailleurs, le document US 2007/155025 A1 décrit une méthode de fabrication d'un dispositif qui comprend le dépôt d'une pluralité de structures de nanofil entre une 1^{ère} et une 2^{ème} microélectrodes magnétiques qui sont disposées sur un substrat, de telle sorte qu'une majorité desdites structures de nanofil soit parallèles entre elles et couplent électriquement lesdites 1^{ère} et 2^{ème} microélectrodes magnétiques.

Les inventeurs de la présente invention ont surmonté tous ces inconvénients détaillés ci-dessus quant à la fabrication des aimants permanents ou doux pour des applications notamment en micro-technologie. Ils ont en effet mis au point un procédé de fabrication d'un aimant permanent ou doux qui :
- est aisé à mettre en œuvre, et ce à température ambiante ;
- est économe en matières premières ;
- offre une variété de tailles : la taille de l'aimant ainsi obtenu peut se situer entre l'échelle micrométrique et millimétrique ;
- pour un aimant permanent, peut être intégré aussi bien dans un MEMS de manière à obtenir un MAGMEMS que dans un dispositif magnéto-optique tels que détaillés ci-dessus, ainsi que dans les puces fluidiques et les biopuces avec fonction magnétique ;
- pour un aimant permanent, peut être mis en œuvre au cours de la fabrication d'un MEMS ou d'un dispositif magnéto-optique ou dans les puces fluidiques et les biopuces avec fonction magnétique ou, si nécessaire, peut être fabriqué indépendamment du reste du MEMS ou du dispositif magnéto-optique ou des puces fluidiques et des biopuces avec fonction magnétique puis, être intégré au sein du MEMS ou du dispositif magnéto-optique ou des puces fluidiques et des biopuces avec fonction magnétique ;
- pour un aimant doux, permet d'augmenter la densité du matériau magnétique obtenu et est compatible avec les techniques de micro-fabrication.

De plus, l'aimant permanent obtenu avec le procédé de fabrication présente des propriétés magnétiques parfaitement appropriées pour les applications magnéto-optiques, ainsi que de microbiologie, télécommunications et capteurs automobiles détaillées ci-dessus. L'aimant doux obtenu avec le procédé de fabrication présente des propriétés magnétiques parfaitement appropriées pour les applications en microélectronique détaillées ci-dessus.

L'invention a donc pour objet un procédé de fabrication d'un aimant permanent ou doux qui se caractérise en ce qu'il comprend au moins les étapes suivantes :
a) on dispose :
   - d'une solution contenant au moins un solvant dans laquelle sont dispersés un ensemble d'objets qui portent un moment magnétique permanent ;
   - d'un substrat sur lequel sont fixés à la surface ou au sein d'une cavité qu'il peut présenter au moins un 1^{er} plot et un 2^{ème} plot qui sont réalisés en un matériau ferromagnétique, ledit 1^{er} plot comporte une face en regard d'une face que comporte le 2^{ème} plot, lesdites faces en regard étant parallèles entre elles ;
b) on dépose la solution sur la surface du substrat ou, le cas échéant, au sein de la cavité, de telle sorte que les 1^{er} et 2^{ème} plots sont au moins en partie immergés dans ladite solution ;
c) on place le substrat dans un champ magnétique orienté selon une direction perpendiculaire aux faces du 1^{er} plot et du 2^{ème} plot qui sont en regard et parallèles entre elles de telle sorte qu'au moins une partie de l'ensemble des objets se regroupent entre ladite face du 1^{er} plot et ladite face du 2^{ème} plot qui sont en regard et parallèles entres elles et que chacun de ces objets s'oriente selon la direction du champ magnétique appliqué, de manière à former un aimant permanent ou doux;
d) optionnellement, on effectue au moins un lavage du substrat avec au moins un solvant ;
e) optionnellement, on évapore totalement ou en partie le au moins un solvant de dispersion de l'ensemble d'objets et, le cas échéant, le au moins un solvant de lavage.

Ainsi, au cours du procédé de fabrication, au moins une partie de l'ensemble des objets qui portent chacun un moment magnétique permanent sont regroupés par magnétophorèse entre la face du 1^{er} plot et la face du 2^{ème} plot qui sont en regard et parallèles entre elles de manière à obtenir un aimant permanent ou doux macroscopique entre ces deux plots.

Le principe d'assemblage dirigé par magnétophorèse repose sur le déplacement d'objets magnétiques au sein d'une suspension colloïdale en présence d'un champ magnétique non uniforme. Les objets sont attirés vers les gradients de champ magnétique positifs, ils s'y assemblent et se compactent lors de l'évaporation du solvant. L'application du champ magnétique a donc deux effets. Le champ magnétique crée un couple sur le moment magnétique porté par les objets qui les aligne dans la direction du champ, et les gradients de champ magnétique positifs créés par les plots ferromagnétiques sur le support permettent de déplacer ces objets et de les localiser de manière dense.

Grâce aux deux plots en matériau ferromagnétique, au moins une partie de l'ensemble des objets qui portent un moment magnétique permanent se structurent entre ces deux plots au cours de l'étape c) de manière à ce que cette partie de l'ensemble d'objets forme un aimant permanent ou doux. En d'autres termes, l'aimant permanent ou doux obtenu à l'issue du procédé de fabrication résulte de la structuration spatiale d'au moins une partie de l'ensemble des objets qui portent un moment magnétique. Cette structuration spatiale est obtenue grâce aux deux plots en matériau ferromagnétique qui présentent deux faces en regard et parallèles entre elles et à l'application d'un champ magnétique qui est orienté selon une direction perpendiculaire à ces deux faces.

Dans un mode de réalisation de l'invention, à l'étape c), l'ensemble des objets se regroupent entre ladite face du 1^{er} plot et ladite face du 2^{ème} plot qui sont en regard et parallèles entre elles et chacun de ces objets s'oriente selon la direction du champ magnétique appliqué, de manière à former un aimant permanent ou doux.

Le procédé de fabrication selon l'invention peut être mis en œuvre au sein d'un dispositif en cours de fabrication, ledit dispositif pouvant être choisi parmi :
- les MAGMEMS (par exemple pour les applications décrites ci-dessus),
- les dispositifs magnéto-optiques (par exemple ceux décrits ci-dessus),
- les puces fluidiques et les biopuces avec fonction magnétique (par exemple pour le tri cellulaire, la séparation d'objets biologiques, la capture de cellules et de molécules).

Dans d'autres modes de réalisation de l'invention envisageables, l'aimant permanent ou doux est fabriqué de manière indépendante du reste du dispositif dans lequel il sera ensuite intégré. Le dispositif dans lequel sera intégré l'aimant permanent peut être un de ceux décrits juste ci-dessus.

Ainsi, le procédé de fabrication selon l'invention présente l'avantage d'être flexible quant à sa mise en œuvre et peut donc parfaitement s'adapter aux cas qui requièrent que l'aimant permanent ou doux soit fabriqué au sein du dispositif dans lequel il est intégré ou au contraire aux cas pour lesquels il est nécessaire que l'aimant permanent ou doux soit intégré au dispositif après sa fabrication. Cette flexibilité de mise en œuvre n'est pas toujours offerte par les techniques de fabrication d'aimants permanents ou doux de l'art antérieur qui ont été rappelées ci-dessus.

Les objets qui portent un moment magnétique permanent peuvent être choisis parmi une variété d'objets.

En ce qui concerne leurs caractéristiques de matériau, il peut s'agir d'objets qui sont réalisés en un métal choisi parmi le cobalt, le fer, le nickel ou le platine, les carbures de ces métaux, les nitrures de ces métaux, pris seuls ou en mélange de ceux-ci (par exemple les mélanges de fer et de platine ou de cobalt et de platine sont envisageables, ainsi que les carbures ou les nitrures des mélanges de ces métaux).

Par exemple, pour la fabrication d'un aimant permanent, on choisira de préférence des objets réalisés en cobalt, fer, nickel ou platine, pris seuls ou en mélange de ceux-ci (par exemple, des mélanges de fer et de platine ou de cobalt et de platine).

Par exemple, pour la fabrication d'un aimant doux, on choisira de préférence des objets réalisés en un matériau magnétique doux, tel que le fer, un mélange de fer et de cobalt (FeCo), un mélange de fer et de nickel (FeNi), des carbures de fer (FeC), des nitrures de fer (FeN), pris seuls ou en mélange de ceux-ci.

En ce qui concerne leurs caractéristiques de dimensionnement, de préférence, lesdits objets sont des nano-objets. Cela signifie qu'ils présentent une taille à l'échelle nanométrique. Par exemple, les nano-objets peuvent être des nano-bâtonnets ou des nanoparticules telles que des particules isotropes de diamètre compris entre 5 et 100 nm.

Dans une forme de réalisation, lesdits objets sont des nano-bâtonnets de cobalt et l'aimant est un aimant permanent.

Par exemple, les nano-bâtonnets de cobalt peuvent avoir été obtenus à partir d'un procédé de synthèse qui est décrit dans la publication de Soumare et al., datant de 2009, intitulée : « Kinetically controlled synthesis of hexagonally close-packed cobalt nanorods with high magnetic coercivity », Advanced Functional Materials, 19, 1971-1977. Cette synthèse consiste en la réduction de carboxylates de cobalt dans une solution de 1,2-butanediol contenant de la soude à une température de 170°C pendant 15 minutes en présence de ruthénium.

La synthèse des nano-bâtonnets de cobalt est ainsi parfaitement à la portée de l'homme du métier.

Dans une autre forme de réalisation, lesdits objets sont des nanoparticules sphériques de carbure de fer et l'aimant est un aimant doux.

Par exemple, les nanoparticules de carbure de fer peuvent avoir été obtenues à partir d'un procédé de synthèse qui est décrit dans la publication S. S. Kale et al., "Iron carbide or iron carbide/cobalt nanoparticles for magnetically-induced CO2 hydrogenation over Ni/SiRAlOx catalysts," Catal. Sci. Technol., vol. 9, no. 10, pp. 2601-2607, 2019.

La synthèse des nanoparticules de carbure de fer est ainsi parfaitement à la portée de l'homme du métier.

Avant leur dispersion dans la solution, les objets qui portent un moment magnétique permanent (par exemple les nano-objets) sont avantageusement lavés afin d'éliminer d'éventuels résidus, notamment des résidus de leur synthèse (par exemple des réactifs en excès ou des produits secondaires de réaction). Cela permet d'obtenir des objets qui portent un moment magnétique permanent exempts d'impuretés qui pourraient être préjudiciables au dispositif dans lequel l'aimant permanent ou doux est intégré. L'étape de lavage de ces objets portant un moment magnétique permanent est parfaitement à la portée de l'homme du métier.

Dans un mode de réalisation de l'invention, lorsque lesdits objets sont des nano-bâtonnets de cobalt obtenus à l'issue du procédé de synthèse détaillé dans la publication précitée de Soumare et al., ils sont avantageusement lavés, afin d'éliminer les résidus de synthèse et l'excès de ligands. Pour ce faire, on peut effectuer un ou plusieurs lavages successifs avec un solvant, par exemple de l'éthanol ou du chloroforme. La solution ainsi obtenue est agitée mécaniquement, puis placée dans un bain à ultrasons, afin que les particules soient redispersées. Lesdites particules sont ensuite attirées magnétiquement et le surnageant est éliminé.

A titre d'exemple, dans un mode de réalisation de l'invention, 540 mg de nano-bâtonnets de cobalt dispersés dans 120 mL de 1,2-butanediol ont été obtenus à partir du procédé de synthèse décrit dans la publication précitée de Soumare et al.. Cela correspond à une concentration molaire de cobalt de 0,08 mol/L. Ensuite, on prélève un volume compris entre 4 et 10 mL de cette solution de nano-bâtonnets de cobalt qu'on lave de la manière suivante : on y ajoute un volume de 10 mL de solvant (éthanol ou chloroforme). La solution obtenue est agitée mécaniquement pendant 20 secondes, puis placée dans un bain d'ultra-sons durant 5 minutes. Les particules sont attirées magnétiquement et le surnageant est éliminé. Ces étapes sont répétées entre 4 et 6 fois, par exemple entre 2 et 3 fois avec l'éthanol et entre 2 à 3 fois avec le chloroforme.

Les objets qui portent un moment magnétique permanent sont dispersés dans une solution qui contient au moins un solvant.

Le solvant de dispersion est avantageusement choisi parmi ceux qui présentent les propriétés suivantes, prises seules ou en combinaison de celles-ci :
- une bonne capacité de dispersion des objets qui portent un moment magnétique permanent ;
- les caractéristiques d'évaporation suivantes : une évaporation totale à température ambiante et sous pression atmosphérique ou une évaporation totale sous vide et/ou à une température modérée (à savoir inférieure à environ 100°C), et ce au bout d'au maximum environ une heure.

En outre, le solvant de dispersion est de préférence choisi parmi les solvants qui peuvent être mis en œuvre au cours de la fabrication des MEMS ou des dispositifs magnéto-optiques, les puces fluidiques et les biopuces avec fonction magnétique, et ce sans risque de les détériorer.

Ce solvant de dispersion peut être notamment choisi parmi l'anisole, le chloroforme, le toluène, le chlorobenzène et le mésitylène, pris seul ou en mélanges de ceux-ci.

La concentration des objets qui portent un moment magnétique permanent dans la solution peut être comprise entre 5.10¹⁵ objets/L et 10¹⁸ objets/L, de préférence entre 5.10¹⁶ objets/L et 2.10¹⁷ objets/L.

Dans un mode de réalisation de l'invention, lorsque lesdits objets qui portent un moment magnétique permanent ont une forme cylindrique de longueur 100 nm et de diamètre 15 nm, la fraction volumique desdits objets dans la solution est comprise entre 0,01% et 10% et de préférence entre 0,1% et 2%.

Dans l'exemple décrit ci-dessus des nano-bâtonnets de cobalt, le volume du solvant de dispersion peut être compris entre 300 µL et 2,5 mL. Cela permet d'obtenir une concentration molaire de cobalt comprise entre 0,13 mol/L et 2,7 mol/L dans la solution. Dans ce mode de réalisation de l'invention, le solvant est de préférence de l'anisole.

Le substrat peut être de forme, taille et matériau très variés.

Dans un mode de réalisation, le substrat peut être une partie du dispositif dans lequel l'aimant permanent obtenu à l'issue du procédé selon l'invention est intégré. Ainsi, il peut s'agir d'une partie d'un MAGMEMS, d'un dispositif magnéto-optique, d'une puce fluidique ou d'une biopuce avec fonction magnétique.

Comme cela sera expliqué ci-dessous, les plots peuvent être fixés sur le substrat par électrodéposition. C'est pourquoi, dans des modes de réalisation de l'invention, le substrat est choisi parmi les substrats appropriés pour une électrodéposition.

Le substrat est réalisé en un matériau non ferromagnétique et qui est compatible avec le solvant dans lequel sont dispersés l'ensemble d'objets qui portent un moment magnétique permanent.

Le substrat peut être réalisé en un matériau choisi parmi le silicium (éventuellement fonctionnalisé avec des molécules telles que l'octadécyltrichlorosilane ou le perfluorodecyltrichlorosilane), le verre, les polymères non solubles dans les solvants organiques (par exemple le polytétrafluoroéthylène, ci-après abrégé « PTFE »), les métaux et la silice.

Au moins 2 plots sont fixés sur le substrat. Comme expliqué ci-dessus, les 2 plots peuvent être fixés à la surface du substrat ou bien au sein d'une cavité que peut comporter ledit substrat.

Dans un mode de réalisation de l'invention, une pluralité de plots sont fixés sur le substrat de telle sorte que chaque plot présente au moins une face en regard d'une face d'au moins un autre plot, ces faces en regard étant toutes parallèles entre elles. Cela présente l'avantage de fabriquer plusieurs aimants permanents en même temps.

Les deux faces en regard de deux plots peuvent être distantes d'une distance comprise entre 10 µm et 1 cm, de préférence entre 50 µm et 1 mm.

Les plots sont réalisés en un matériau ferromagnétique. Ce matériau ferromagnétique peut être choisi parmi le nickel, le cobalt, l'acier, les alliages de nickel et de fer (par exemple le permalloy), les alliages de fer et de cobalt, les alliages de fer et de platine, les alliages de cobalt et de platine, les alliages de nickel et de fer et les alliages de nickel, cobalt, manganèse et phosphore, pris seul ou en mélange de ceux-ci.

Dans un 1^{er} mode de réalisation de l'invention, les plots sont fixés à la surface du substrat. Par exemple, ils peuvent être fixés par électrodéposition, pulvérisation cathodique ou dépôt de couche atomique.

Dans ce 1^{er} mode de réalisation de l'invention, les plots peuvent être fixés à la surface du substrat par l'intermédiaire d'une couche d'accroche. Cette couche d'accroche peut être mise en œuvre notamment lorsque les plots sont fixés par électrodéposition à la surface du substrat. Par exemple, cette couche d'accroche est constituée de la superposition d'une couche de cuivre sur une couche de titane.

Dans ce 1^{er} mode de réalisation de l'invention dans lequel les plots sont fixés à la surface du substrat :
- le substrat peut présenter une forme tridimensionnelle quelconque. Par exemple, le substrat peut présenter une base dont l'aire est comprise entre 4 mm² et 2 500 cm², de préférence entre 4 cm² et 100 cm² et une hauteur mesurée à partir de cette base comprise entre 10 µm et 10 cm, de préférence entre 250 µm et 1 mm,
- les plots peuvent présenter une forme tridimensionnelle quelconque. Par exemple, les plots peuvent présenter une base qui est fixée à la surface du substrat et dont l'aire est comprise entre 50 µm² et 1 cm², de préférence entre 2500 µm² et 1 mm², et une hauteur mesurée à partir de cette base comprise entre 10 µm et 1 mm, de préférence entre 50 µm et 500 µm,
- les deux faces en regard et parallèles entre elles des deux plots sont avantageusement distantes d'une distance comprise entre 10 µm et 1 cm, de préférence entre 50 µm et 1 mm.

Dans ce 1^{er} mode de réalisation de l'invention, le substrat peut comprendre entre 2 et 100, de préférence entre 2 et 10, plots qui sont fixés à sa surface, chaque plot présentant au moins une face en regard d'une face d'un autre plot, lesdites faces en regard étant toutes parallèles entre elles. Cela permet de fabriquer plusieurs aimants permanents en même temps.

A titre d'exemple de ce 1^{er} mode de réalisation de l'invention, le substrat peut être une plaquette de forme cylindrique (réalisée en un matériau parmi ceux décrits ci-dessus, par exemple le silicium) et dont le diamètre est compris entre 4 mm et 50 cm et la hauteur est comprise entre 50 µm et 1 mm. Les plots sont réalisés en un matériau ferromagnétique (par exemple un de ceux décrits ci-dessus, notamment le nickel) et peuvent présenter une forme parallélépipédique dont la hauteur est de 200 µm, la largeur de 500 µm et la longueur comprise entre 100 µm et 1 000 µm.

Dans un 2^{ème} mode de réalisation de l'invention, les plots sont fixés au sein d'une cavité que présente le substrat.

Dans une 1^{ère} variante de ce 2^{ème} mode de réalisation :
- le substrat peut présenter une forme tridimensionnelle quelconque. Par exemple, le substrat peut présenter une base dont l'aire est comprise entre 1 mm² et 100 cm², de préférence entre 25 mm² et 4 cm², et une hauteur mesurée à partir de cette base comprise entre 1 mm et 10 cm, de préférence entre 5 mm et 2 cm,
- le substrat peut présenter au moins une cavité dont le volume est compris entre 1 mm³ et 500 cm³, de préférence entre 125 mm³ et 8 cm³, et une profondeur comprise entre 1 mm et 10 cm, de préférence entre 5 mm et 2 cm,
- les plots qui sont fixés au sein de la cavité du substrat peuvent présenter une forme tridimensionnelle quelconque. Par exemple, les plots peuvent présenter une base qui est en contact avec le substrat dont l'aire est comprise entre 0,01 mm² et 1000 mm², de préférence entre 0,05 mm² et 50 mm² et une hauteur mesurée à partir de cette base comprise entre 100 µm et 5 mm, de préférence entre 500 µm et 1 mm,
- les deux faces en regard et parallèles entre elles des deux plots sont avantageusement distantes d'une distance comprise entre 100 µm et 10 mm, de préférence entre 500 µm et 1 mm.

Dans cette 1^{ère} variante du 2^{ème} mode de réalisation, les plots peuvent être encastrés dans la paroi du substrat.

Dans ces modes de réalisation de l'invention décrits juste ci-dessus, l'aimant permanent ou doux est fabriqué en dehors du dispositif dans lequel il va être intégré.

A titre d'exemple, dans cette 1^{ère} variante du 2^{ème} mode de réalisation, le substrat peut être réalisé en PTFE et les plots peuvent avoir une forme cylindrique avec une base présentant la forme d'un disque qui est fixée sur le substrat au sein de sa cavité, lesdits plots peuvent être réalisés en acier. Les deux faces en regard et parallèles entre elles des deux plots présentent donc la forme d'un disque.

Dans ces modes de réalisation de l'invention, la cavité peut présenter une 1^{ère} face en regard d'une 2^{ème} face, une pluralité de plots étant fixés sur la 1^{ère} face de la cavité et présentent chacun une face en regard d'une face d'un des plots de la pluralité de plots qui est fixée sur la 2^{ème} face de la cavité, lesdites faces en regard des plots étant toutes parallèles entre elles. Cela présente l'avantage de fabriquer plusieurs aimants permanents ou doux en même temps.

Dans une 2^{ème} variante de ce 2^{ème} mode de réalisation dans lequel les plots sont fixés au sein d'une cavité que présente le substrat :
- le substrat peut présenter une forme tridimensionnelle quelconque. Par exemple, le substrat peut présenter une base dont l'aire est comprise entre 4 mm² et 2 500 cm², de préférence entre 4 cm² et 100 cm² et une hauteur mesurée à partir de cette base comprise entre 10 µm et 10 cm, de préférence entre 250 µm et 500 µm,
- le substrat peut présenter au moins une cavité dont le volume est compris entre 500 µm³ et 100 mm³, de préférence entre 125 000 µm³ et 0,5 mm³, et une profondeur comprise entre 10 µm et 1 mm, de préférence entre 50 µm et 500 µm,
- au moins un 1^{er} plot étant fixé sur une 1^{ère} face de la cavité et comporte une face en regard et parallèle à une face d'un 2^{ème} plot fixé sur une 2^{ème} face de la cavité,
- lesdits plots peuvent présenter une base qui est en contact avec le substrat dont l'aire est comprise entre 50 µm² et 1 cm², de préférence entre 2500 µm² et 1 mm², et une hauteur mesurée à partir de cette base comprise entre 10 µm et 1 mm, de préférence entre 50 µm et 500 µm,
- les deux faces en regard et parallèles entre elles des deux plots sont avantageusement distantes d'une distance comprise entre 10 µm et 1 cm, de préférence entre 50 µm et 1 mm.

Dans cette 2^{ème} variante du 2^{ème} mode de réalisation de l'invention, une pluralité de plots peuvent être fixés sur la 1^{ère} face de la cavité, chacun de ces plots présentant une face en regard de la face d'un des plots de la pluralité de plots qui sont fixés sur la 2^{ème} face de la cavité, lesdites faces en regard des plots étant toutes parallèles entre elles.

Dans cette 2^{ème} variante du 2^{ème} mode de réalisation de l'invention, les plots peuvent être réalisés en un matériau ferromagnétique choisi parmi ceux décrits ci-dessus. Le substrat peut être avantageusement réalisé en un matériau choisi parmi ceux décrits ci-dessus pour le substrat.

Dans cette 2^{ème} variante du 2^{ème} mode de réalisation de l'invention, les plots peuvent avoir été fixés sur la 1^{ère} face et la 2^{ème} face de la cavité par électrodéposition, pulvérisation cathodique ou dépôt de couche atomique.

Dans ces modes de réalisation de l'invention, une couche continue de matériau ferromagnétique peut avoir été électrodéposée sur au moins une partie de la 1^{ère} face de la cavité et sur au moins une partie de la 2^{ème} face de la cavité qui en regard et parallèle à la 1^{ère} face, ainsi que sur une face du fond de la cavité reliant ces 1^{ère} et 2^{ème} faces de la cavité.

A l'étape b) du procédé selon l'invention, on dépose la solution sur la surface du substrat ou, le cas échéant, au sein de sa cavité de telle sorte que les plots sont immergés au moins en partie. Par exemple, le dépôt de la solution peut être réalisé avec un dispenseur, une pipette ou une micropipette de manière à déposer un volume déterminé de la solution.

La hauteur maximale que peut atteindre l'aimant permanent ou doux obtenu à l'issue du procédé de fabrication selon l'invention est la hauteur de la portion des plots qui aura été immergée dans la solution. En d'autres termes, si les plots sont totalement immergés dans la solution au cours de l'étape b), la hauteur maximale que peut atteindre l'aimant de l'aimant permanent ou doux correspond à la hauteur des plots.

En effet, la hauteur de l'aimant permanent ou doux obtenu à l'issue du procédé de fabrication selon l'invention va dépendre notamment de la manière dont auront été réalisées les étapes b) à d) plus précisément décrites ci-après, et en particulier du nombre de fois qu'elles auront été répétées. Bien entendu, il est à la portée de l'homme du métier de mettre en œuvre ces étapes pour obtenir la hauteur souhaitée de l'aimant permanent ou doux.

La hauteur de l'aimant permanent ou doux obtenu avec le procédé de fabrication selon l'invention peut être comprise entre 10 µm et 1 mm.

A l'étape c) du procédé selon l'invention, on place le substrat dans un champ magnétique de telle sorte qu'au moins une partie de l'ensemble d'objets se regroupe entre deux faces en regard de deux plots vers les gradients de champ magnétique positifs et s'oriente selon la direction du champ magnétique de manière à former un aimant permanent. Ainsi, un champ magnétique est appliqué au niveau de l'ensemble du substrat, aimantant les plots du substrat.

A l'étape c), l'intensité du champ magnétique peut être comprise entre 100 mT et 1 T, de préférence entre 400 mT et 1 T. De manière tout à fait préférée, l'intensité du champ magnétique est de 1 T.

Au cours de l'étape c), le champ magnétique peut être constant au cours du temps ou bien évoluer au cours du temps. Par exemple, le champ magnétique peut présenter des paliers et/ou des rampes au cours du temps.

Lorsque l'intensité du champ magnétique n'est pas constante au cours du temps, par exemple s'il présente des paliers, cela présente l'avantage de mieux densifier l'aimant permanent ou doux au cours de sa fabrication.

Par exemple, l'intensité du champ magnétique peut passer de 0 T à 1 T en 20 secondes avec une rampe de 50 mT/s.

Dans un autre exemple, l'intensité du champ magnétique peut passer de 0 T à 1 T en 400 s avec 20 paliers successifs d'une durée de 20 secondes, l'intensité augmentant de 50 mT entre chaque palier.

Le champ magnétique peut être produit par un électroaimant (par exemple un électroaimant qui est utilisé pour des expériences de résonance paramagnétique électronique).

Le substrat peut être placé dans le champ magnétique pendant une durée comprise entre 1 minute et 10 heures, de préférence entre 5 min et 1 heure.

Au cours de l'étape c), au moins une partie du solvant de la solution s'évapore. De manière préférée, à l'étape c), on maintient le champ magnétique jusqu'à l'évaporation totale du solvant de la solution.

Ensuite, à l'issue de l'étape c), lorsque le champ magnétique a été arrêté, optionnellement, on peut effectuer au cours d'une étape d) du procédé selon l'invention un ou plusieurs lavages avec au moins un solvant. Le solvant peut être choisi parmi le chloroforme, le toluène, l'anisole, le mésitylène et le chlorobenzène. Cela permet d'éliminer le solvant de dispersion encore présent à l'issue de l'étape c), autrement dit le solvant de dispersion qui ne se serait pas évaporé au cours de l'étape c).

Les étapes b) à c) ou, le cas échéant lorsque le procédé comprend une étape de lavage d), les étapes b) à d) telles que décrites ci-dessus, peuvent être répétées plusieurs fois. Par exemple, elles peuvent être répétées entre 1 et 50 fois, de préférence entre 1 et 10 fois.

De préférence, avant chaque nouveau dépôt de solution conformément à l'étape b), on stoppe ou on diminue le champ magnétique à une intensité inférieure à 10 mT afin de ne pas amoindrir les propriétés magnétiques de l'aimant permanent ou doux en cours de fabrication.

A l'issue de l'étape c), ou le cas échéant à l'issue de l'étape d), on peut optionnellement réaliser une étape e) qui consiste en l'évaporation totale des solvants (à savoir le solvant de la solution et les éventuels solvants de lavage).

L'étape e) d'évaporation peut être réalisée en appliquant un champ magnétique dont l'intensité est comprise entre 100 mT et 1 T, de préférence entre 400 mT et 1 T, et ce pendant une durée comprise entre 1 minute et 10 heures, de préférence entre 1 minute et 1 heure. La durée de l'évaporation va dépendre du solvant à évaporer. Dans un mode de réalisation de l'invention dans lequel le solvant à évaporer est du chloroforme, l'intensité du champ magnétique peut être de 1 T et la durée de 5 minutes.

L'étape e) d'évaporation peut être contrôlée :
- en agissant sur la température du substrat (qui peut être notamment réglée avec un module Peltier),
- en contrôlant la pression ambiante (par exemple en instaurant un sous vide partiel avec une pompe à membrane par exemple).

Par ailleurs, plus le solvant de dispersion a un point d'ébullition faible, plus il sera facile de l'évaporer soit au cours de l'étape c), soit au cours de l'étape e) avec le solvant de lavage.

Dans les modes de réalisation de l'invention dans lesquels l'aimant permanent ou doux est fabriqué au sein d'une cavité entre deux plots qui présentent chacun une base qui est en contact avec le substrat et dont l'aire est comprise entre 0,01 mm² et 1000 mm² (de préférence entre 0,05 mm² et 50 mm²) et une hauteur mesurée à partir de cette base comprise entre 100 µm et 5 mm (de préférence entre 500 µm et 1 mm), l'aimant permanent ou doux peut être récupéré sans difficulté à l'issue du procédé de fabrication selon l'invention. Comme expliqué ci-dessus, dans ces modes de réalisation de l'invention, l'aimant permanent ou doux est fabriqué en dehors du dispositif dans lequel il va être intégré.

Dans les modes de réalisation de l'invention dans lesquels l'aimant permanent ou doux est destiné à rester intégré sur le substrat (par exemple une partie d'un MEMS ou d'un dispositif magnéto-optique pour un aimant permanent), il peut être mis en œuvre une étape d'élimination des plots. Par exemple, cette étape peut consister en une gravure chimique, notamment si les plots ont été fixés par électrodéposition.

Bien entendu, l'élimination des plots n'est pas obligatoire. En effet, dans les cas où l'aimant permanent est intégré au sein d'un MEMS ou d'un dispositif magnéto-optique, les plots peuvent être maintenus fixés sur ces types de substrat sans que cela n'empêche leur bon fonctionnement.

Il est important de noter que le procédé de fabrication d'un aimant permanent selon l'invention est parfaitement intégrable dans un procédé classique de micro-électronique, notamment au cours de la fabrication et au sein d'un MAGMEMS, d'un dispositif magnéto-optique, d'une puce fluidique ou d'une biopuce avec fonction magnétique.

Il est décrit un dispositif choisi parmi un MAGMEMS, un dispositif magnéto-optique, un composant microélectronique, un composant hautes fréquences, une puce fluidique ou une biopuce avec fonction magnétique comprenant
- au moins un aimant permanent ou doux obtenu selon le procédé de fabrication selon l'invention tel que décrit ci-dessus ;
- au moins un substrat ;
- au moins un 1^{er} plot et un 2^{e} plot qui sont réalisés en un matériau ferromagnétique et qui sont fixés à la surface ou au sein d'une cavité que peut présenter ledit substrat, ledit 1^{er} plot comporte une face en regard et parallèle à une face que comporte le 2^{e} plot,
ledit aimant permanent ou doux est situé entre lesdites faces en regard et parallèles entre elles du 1^{er} et 2^{ème} plots.

Les caractéristiques du substrat, du 1^{er} et du 2^{ème} plots peuvent être celles qui ont été décrites ci-dessus pour le 1^{ier} mode de réalisation et la 2^{ème} variante du 2^{ème} mode de réalisation du procédé de fabrication selon l'invention.

Le MAGMEMS peut être choisi parmi tout type de capteur et actionneur MEMS à transduction électromagnétique. Par exemple, il peut s'agir de capteur de champ magnétique, de collecteur d'énergie ou de relais.

Ces MAGMEMS peuvent être utilisés dans des applications très variées : en microbiologie, notamment pour la séparation magnétique micro-fluidique (par exemple des biocapteurs), dans les télécommunications (par exemple les micro-interrupteurs radiofréquences) et dans les capteurs automobiles.

Le dispositif magnéto-optique peut être choisi parmi les capteurs magnéto-optiques (par exemple les capteurs de fibres optiques, les capteurs rotatifs et les capteurs polarimètriques), les déflecteurs, les modulateurs (par exemple les modulateurs hyperfréquences) et les composants non réciproques (par exemple les isolateurs et les circulateurs).

L'invention sera mieux comprise à l'aide de la description détaillée d'expérimentations qui sont exposées ci-dessous en référence au dessin annexé représentant des résultats de données expérimentales relatives au procédé de fabrication selon l'invention.

### DESCRIPTION DES FIGURES

[FIG. 1] est une représentation schématique en perspective d'un substrat en silicium sur lequel sont fixés deux plots en nickel.
[FIG. 2] est une photographie effectuée au microscope électronique à balayage (ci-après abrégé « MEB) d'une 1^{ère} structure « plot de nickel/aimant permanent en cobalt/plot de nickel » qui a été prise à l'issue d'une 1^{ère} mise en œuvre du procédé de fabrication selon l'invention.
[FIG. 3] est un graphe de mesures profilométriques du nickel et du cobalt de cette 1^{ère} structure.
[FIG. 4] est une photographie effectuée au MEB d'une 2^{ème} structure « plot de nickel/aimant permanent en cobalt/plot de nickel » qui a été prise à l'issue d'une 2^{ème} mise en œuvre du procédé de fabrication selon l'invention.
[FIG. 5] est un graphe de mesures profilométriques du nickel et du cobalt de cette 2^{ème} structure.
[FIG. 6] est un graphe représentant les courbes d'hystérésis de ces 1^{ère} et 2^{ème} structures, ainsi que d'un aimant permanent de référence.
[FIG. 7] représente un graphe de l'évolution de l'induction magnétique et de l'amplitude de vibration d'un résonateur MEMS de la 1^{ère} structure.
[FIG. 8] représente un graphe de l'évolution de l'induction magnétique et de l'amplitude de vibration d'un résonateur MEMS de la 2^{ème} structure.
[FIG. 9] est une représentation schématique en perspective d'un substrat en silicium sur lequel sont fixés des plots en nickel.
[FIG. 10] est une photographie effectuée au MEB du cobalt d'un aimant permanent qui a été prise à l'issue d'une 3^{ème} mise en œuvre du procédé de fabrication selon l'invention.
[FIG. 11] est un graphe de mesures profilométriques du nickel et du cobalt d'une 3^{ème} structure « plot de nickel/aimant permanent en cobalt/plot de nickel » obtenue à l'issue de cette 3^{ème} mise en œuvre du procédé de fabrication selon l'invention.
[FIG. 12] est une représentation schématique en perspective d'un substrat en PTFE dans lequel une cavité a été ménagée et au sein de laquelle sont fixés deux plots en acier.
[FIG. 13] est un graphe représentant les courbes de désaimantation de l'aimant permanent en cobalt obtenu selon une 4^{ème} mise en œuvre du procédé de fabrication selon l'invention, ainsi que celui d'un aimant permanent de référence.
[FIG. 14] représente un graphe de l'évolution de l'induction magnétique et de l'amplitude de vibration d'un résonateur MEMS de l'aimant permanent en cobalt obtenu selon cette 4^{ème} mise en œuvre du procédé de fabrication selon l'invention.
[FIG. 15] est une représentation schématique en perspective d'un substrat qui présente une cavité au sein de laquelle sont fixés des plots.
[FIG. 16] est une vue en coupe suivant le plan P de la figure 15 du substrat.
[FIG. 17] est une photographie effectuée au MEB d'une structure « plot de nickel/aimant doux en carbure de fer/plot de nickel » qui a été prise à l'issue d'une 5^{ième} mise en œuvre du procédé de fabrication selon l'invention,
[FIG. 18] est une photographie effectuée au MEB des nanoparticules de carbure de fer d'un aimant doux qui a été prise à l'issue de la 5^{ième} mise en œuvre du procédé de fabrication selon l'invention,
[FIG. 19] est un graphe représentant les courbes d'hystérésis de l'aimant doux obtenu à l'issue de la 5^{ième} mise en œuvre du procédé de fabrication selon l'invention.

### PARTIE EXPERIMENTALE

### A : 1^{ère} série d'expérimentations :

### A - I - Réalisation de l'étape a) du procédé de fabrication selon l'invention :

### Préparation de nano-bâtonnets de cobalt :

540 mg de nano-bâtonnets de cobalt dispersés dans 120 mL de 1,2-butanediol ont été obtenus à partir du procédé de synthèse décrit dans la publication précitée : Soumare et al., datant de 2009, intitulée : « Kinetically controlled synthesis of hexagonally close-packed cobalt nanorods with high magnetic coercivity », Advanced Functional Materials, 19, 1971-1977. Cela correspondait à une concentration molaire de cobalt de 0,08 mol/L.

Un volume de 10 mL de solution a été prélevé, puis lavé afin d'éliminer les résidus de la synthèse et l'excès de ligands.

Plus précisément, le lavage a été réalisé de la manière suivante : on a ajouté un volume de 10 mL de solvant (éthanol ou chloroforme). La solution obtenue a été agitée mécaniquement pendant 20 secondes, puis placée dans un bain d'ultra-sons durant 5 minutes. Les particules ont été attirées magnétiquement et le surnageant a été éliminé. Ces étapes ont été répétées 4 fois : 2 fois avec l'éthanol, puis 2 avec le chloroforme.

A l'issue du lavage, les nano-bâtonnets de cobalt ont été redispersés dans 300 µL d'anisole, de manière à obtenir une solution d'anisole contenant des nano-bâtonnets de cobalt une concentration molaire de 2,7 mol/L.

### Fabrication et fixation des plots sur des substrats :

On disposait de deux substrats qui étaient des plaquettes de silicium carrée de 1 cm de côté et de 500 µm d'épaisseur.

Sur la 1^{ère} plaquette de silicium ont été fixés deux plots en nickel selon une 1^{ère} forme de réalisation.

Sur la 2^{ème} plaquette de silicium ont été fixés deux plots en nickel selon une 2^{ème} forme de réalisation.

### 1^{ère} forme de réalisation des plots :

La fixation sur la plaquette de silicium de plots en nickel selon la 1^{ère} forme de réalisation a été réalisée de la manière suivante :
Une couche de titane d'une épaisseur de 50 nm, puis une couche de cuivre de 400 nm ont été déposées sur la plaquette de silicium par pulvérisation.

Ensuite, une couche d'épaisseur d'environ 200 µm de la résine commercialisée sous la dénomination commerciale WBR^{™} 2100 par la société DuPont qui est une résine photorésistante a été déposée par lamination sur la couche de cuivre.

La résine a été insolée par photolithographie et développée afin d'obtenir des puits correspondants à deux rectangles :
- d'une largeur « l » de 500 µm,
- d'une longueur « L₁ » de 100 µm,
- espacés d'une distance « d » de 500 µm.

Ensuite, du nickel a été électrodéposé au sein de ces deux rectangles, et ce avec la même épaisseur que la résine.

La résine a été retirée avec un bain d'acétone.

Le cuivre et le titane situés à l'extérieur des deux rectangles ont été gravés dans un mélange d'eau oxygénée (dilué à 1% en volume dans de l'eau déionisée) et d'acide sulfurique dilué à 1% en volume dans de l'eau déionisée.

On a ainsi obtenu une plaquette de silicium (à savoir le substrat) sur laquelle sont fixés deux plots en nickel de forme parallélépipédique par l'intermédiaire d'une couche d'accroche constituée de la superposition de la couche de titane de 50 nm d'épaisseur et de la couche de cuivre de 400 nm.

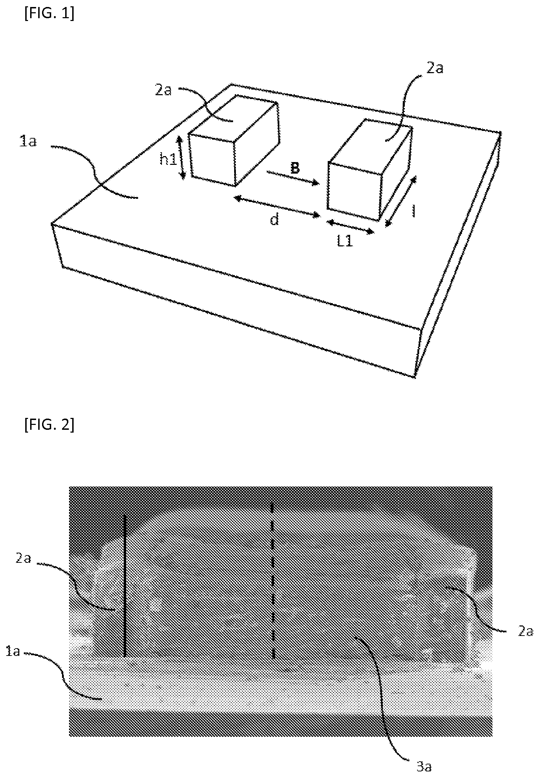

La figure 1 représente de manière schématique et en perspective cette plaquette silicium 1a sur laquelle sont fixés les deux plots 2a en nickel de forme parallélépipédique qui présentent une largeur « l » : 500 µm, une longueur L₁ : 100 µm et une hauteur « h1 » : 168 µm et qui sont espacés d'une distance « d » de 500 µm. La couche d'accroche constituée de titane et de cuivre n'est pas représentée sur la figure 1.

Comme cela est visible sur la figure 1, la direction du champ magnétique B est perpendiculaire aux faces en regard du 1^{er} et 2^{ème} plots 2a.

### 2^{ème} forme de réalisation des plots :

La 2^{ème} forme de réalisation des plots a été réalisée de manière identique à celle décrite pour la 1^{ère} forme de réalisation à l'exception que la longueur était une longueur « L₂ » de 1000 µm et la hauteur était une hauteur « h2 » de 193 µm.

On a ainsi obtenu une plaquette de silicium (à savoir le substrat) sur laquelle sont fixés deux plots en nickel de forme parallélépipédique par l'intermédiaire d'une couche d'accroche constituée de la superposition de la couche de titane de 50 nm d'épaisseur et de la couche de cuivre de 400 nm.

### A - II - Réalisation des étapes b) à e) du procédé de fabrication selon l'invention:

La plaquette de silicium avec la 1^{ère} forme de réalisation des plots ainsi obtenue a été lavée à l'éthanol et à l'acétone, séchée avec un flux d'azote puis a été déposée au fond d'un moule en PTFE.

Le moule a été placé dans un électroaimant qui est utilisé pour des expériences de résonance paramagnétique électronique et qui peut générer un champ magnétique statique dont l'intensité peut varier entre 0 T et 1 T.

Ensuite, on a répété 8 fois de suite l'enchaînement des étapes b) à d) du procédé de fabrication, et ce de la manière suivante :
- à l'étape b), on a déposé 10 µL de la solution d'anisole contenant les nano-bâtonnets de cobalt à une concentration molaire de 2,7 mol/L sur la plaquette de silicium.
- à l'étape c), un champ magnétique de 1 T orienté selon une direction parallèle la longueur L₁ a été appliqué pendant 5 minutes. Au cours de cette étape c), une partie de l'anisole s'est évaporé.
- à l'étape d), on a effectué un lavage de la plaquette de silicium avec 1 mL de chloroforme qu'on a injecté dans le moule par flux latéral de manière à éliminer l'anisole en excès qui ne s'est pas évaporé au cours de l'étape c) et les nano-bâtonnets qui ne se sont pas alignés entre les deux plots de nickel.

Avant chaque nouvelle répétition (c'est-à-dire avant chaque nouvelle mise en œuvre de l'étape b), l'intensité du champ magnétique a été ramenée à 0 T.

Puis, à l'issue de ces 8 répétitions des étapes b) à d), afin d'évaporer la totalité de l'anisole, on a appliqué un champ magnétique de 1 T orienté selon une direction parallèle la longueur L₁ pendant 1 heure.

Les manipulations décrites ci-dessous ont été effectuées de manière identique pour la 2^{ième} plaquette de silicium sur laquelle sont fixés les plots selon la 2^{ème} forme de réalisation à l'exception que les enchaînements des étapes b) à d) ont été répétés 7 fois.

Ainsi, le procédé de fabrication selon l'invention a été réalisé :
- selon une 1^{ère} mise en œuvre qui a abouti à une 1^{ère} structure se composant d'un 1^{er} aimant permanent en cobalt entouré par deux plots de nickel ;
- selon une 2^{ème} mise en œuvre qui a abouti à une 2^{ème} structure se composant d'un 2^{ème} aimant permanent en cobalt entouré par deux plots de nickel.

Les propriétés physiques de ces 1^{ère} et 2^{ème} structures ont été étudiées et sont détaillées ci-après.

### A -III - Prises de vues et mesures profilométriques :

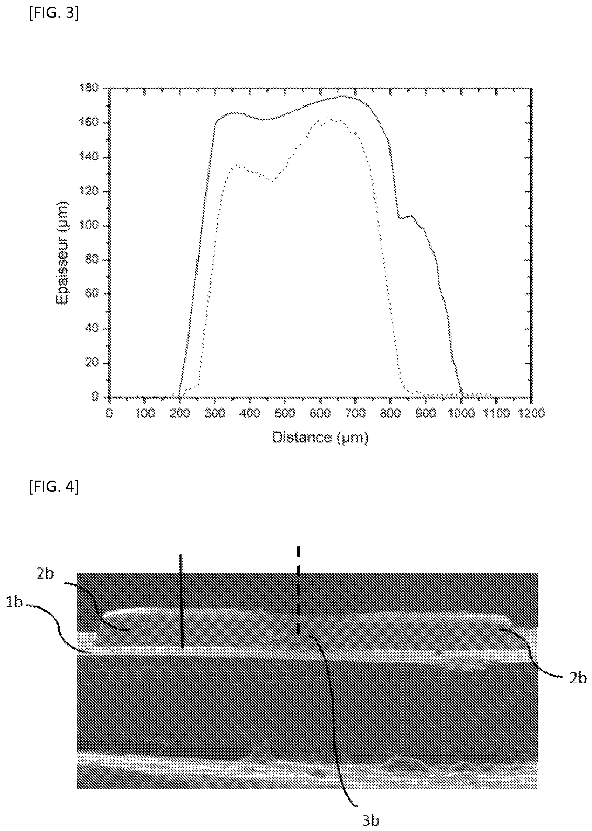

Les figures 2 et 4 sont des photographies effectuées au MEB de la 1^{ère} et de la 2^{ème} structures telles que décrites ci-dessus. Ces photographies ont donc été prises à l'issue d'un 1^{er} et d'un 2^{ème} mises en œuvre du procédé de fabrication selon l'invention.

La photographie de la figure 2 a été prise avec un grossissement de 150 fois et la photographie de la figure 4 avec un grossissement de 43 fois avec un MEB commercialisé par la société JEOL sous la dénomination commerciale JSM-7800 F.

Sur la figure 2, on discerne une partie de la l^{ière} plaquette de silicium 1a, les plots 2a en nickel, ainsi que le 1^{ier} aimant permanent 3a qui résulte du regroupement des nano-bâtonnets de cobalt entre ces deux plots 2a qui sont écartés d'une distance « d ».

Sur la figure 4, on discerne une partie de la 2^{ième} plaquette de silicium 1b, les plots 2b en nickel, ainsi que le 2^{ème} aimant permanent 3b qui résulte du regroupement des nano-bâtonnets de cobalt entre ces deux plots 2b qui sont écartés d'une distance « d ».

Des mesures profilométriques ont été effectuées avec un profilomètre mécanique commercialisé par la société KLA TENCOR sous la dénomination commerciale P-17.

Les mesures profilométriques ont été réalisées :
- sur un des plots 2a en nickel à l'endroit signalé par un segment en continu sur la figure 2 ;
- sur le 1^{er} aimant permanent 3a à l'endroit signalé par un segment en pointillés sur la figure 2 ;
- sur un des plots 2b en nickel à l'endroit signalé par un segment en continu sur la figure 4 ;
- sur le 2^{ème} aimant permanent 3b à l'endroit signalé par un segment en pointillés sur la figure 4.

Ces mesures ont ainsi été réalisées sur la largeur des plots de nickel et la largeur des deux aimants permanents obtenus à l'issue du procédé de fabrication.

La figure 3 est un graphe représentant les évolutions de:
- la hauteur du plot 2a de nickel en fonction de la distance mesurée à partir d'une distance de 300 µm de l'extrémité dudit plot 2a (courbe en continu) ;
- la hauteur du 1^{er} aimant permanent 3a en fonction de la distance mesurée à partir d'une distance de 300 µm de l'extrémité dudit aimant 3a (courbe en pointillés).

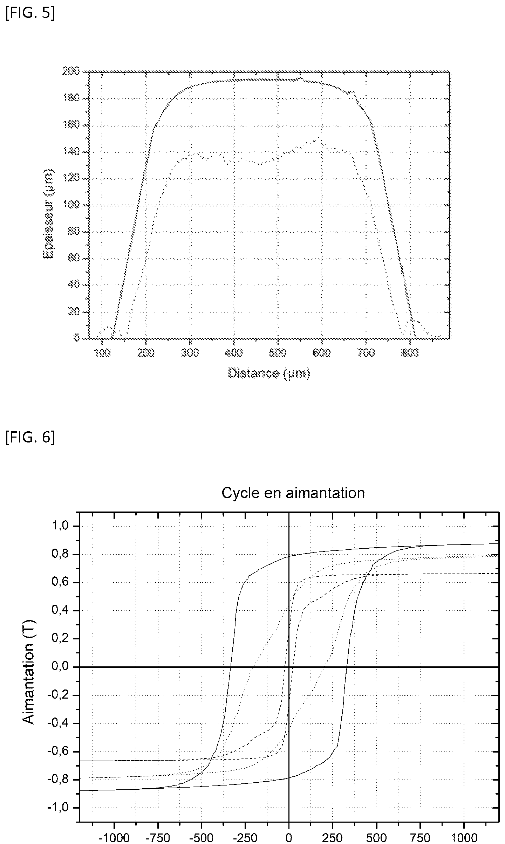

La figure 5 est un graphe représentant les évolutions de :
- la hauteur du plot 2b de nickel en fonction de la distance mesurée à partir d'une distance de 220 µm de l'extrémité dudit plot 2b (courbe en continu) ;
- la hauteur du 2^{ème} aimant permanent 3b en fonction de la distance mesurée à partir d'une distance de 220 µm de l'extrémité dudit aimant 3b (courbe en pointillés).

Au vu des figures 3 et 5, on relève que l'allure des profils des 1^{er} et 2^{ème} aimants permanents 3a,3b est similaire à celle des profils respectivement des plots en nickel 2a et 2b.

En effet, pour les deux aimants permanents 3a, 3b, on note :
- une légère diminution de leur largeur (qui est de 430 µm) par rapport à celle des plots en nickel qui est de 500 µm.
- une hauteur de 144 µm pour le 1^{er} aimant permanent 3a proche de celle du plot en nickel 2a qui est de 168 µm,
- une hauteur de 140 µm pour le 2^{ème} aimant permanent 3b proche de celle du plot en nickel 2b qui est de 193 µm.

### A-IV- Caractérisations magnétiques des 1^{er} et 2^{ème} structures « plot de nickel/aimant permanent en cobalt/plot de nickel » :

Une mesure par magnétométrie a été réalisée afin de déterminer les propriétés magnétiques à température ambiante des 1^{ère} et 2^{ème} structures « plot de nickel/aimant permanent en cobalt/plot de nickel » telles que décrites ci-dessus.

La figure 6 représente les cycles d'hystérésis de :
- la 1^{ère} structure (Courbe en pointillés très serrés) ;
- la 2^{ème} structure (Courbe en pointillés) ;
- un aimant dit de « référence » (Courbe en continu).

L'aimant de référence a été obtenu dans un moule en PTFE à partir de la dispersion dans 300 µL de chloroforme de 2 mg de nano-bâtonnets de cobalt fabriqués selon la synthèse décrite ci-dessus, puis séchés à température ambiante dans un champ magnétique de 1 T généré par un électroaimant dans un moule en PTFE.

A la différence des aimants permanents des 1^{ère} et 2^{ème} structures, cet aimant de référence n'a pas été structuré spatialement. Les nano-bâtonnet de cobalt se sont simplement étalés sur toute la surface du moule et alignés selon la direction de champ magnétique appliqué. Il n'y a donc pas eu de structuration des nano-bâtonnets de manière à former un volume structuré comme cela est le cas avec le procédé de fabrication selon l'invention. Ainsi, le cycle d'hystérésis de l'aimant de référence correspond aux propriétés magnétiques intrinsèques des nano-bâtonnets de cobalt.

Le tableau 1 ci-dessous détaille les valeurs déterminées du champ coercitif H_{c} (en kA/m) et de l'aimantation rémanente µ₀Mᵣ (en mT) pour la 1^{ère} et 2^{ème} structures, ainsi que pour l'aimant de référence.

### [Tableau 1]

**Tableau 1 détaillant les propriétés magnétiques des 1^{ère} et 2^{ème} structures et de l'aimant de référence**

| | µ₀Mᵣ (mT) | Hc (kA/m) |
|---|---|---|
| 1^{ère} structure | 440 | 250 |
| 2^{ème} structure | 248 | 26 |
| aimant de référence | 780 | 330 |

Les différences importantes de propriétés magnétiques relevées dans le tableau 1 et sur la figure 6 entre le 1^{er} et la 2^{ème} structures s'expliquent principalement par la quantité différente de nickel présente dans ces structures. Le nickel est un matériau ferromagnétique doux de champ coercitif très faible (0,1 kA/m). Les plots 2b qui ont été utilisés pour la fabrication du 2^{ème} aimant permanent 3b avaient un volume 10 fois plus élevé que les plots 2a ; ce qui a contribué à fortement diminuer les propriétés magnétiques de ce 2^{ème} aimant permanent 3b.

De manière à optimiser les propriétés magnétiques de telles structures, il convient donc de minimiser la longueur L des plots en nickel. Pour des raisons technologiques liées à l'électrodéposition, la valeur minimale de la longueur « L » correspond au quart de la hauteur « h » du plot en nickel, c'est-à-dire pour le cas de cette 1^{ère} série d'expérimentations pour une épaisseur d'environ 200 µm : une longueur minimale de 50 µm.

Les propriétés magnétiques ainsi obtenues pour les 1^{ère} et 2^{ème} structures sont très satisfaisantes, en particulier pour l'intégration des aimants permanents qu'elles comportent au sein de dispositifs tels que des MAGMEMS et des dispositifs magnéto-optiques.

Certes, on relève que les propriétés magnétiques des 1^{ère} et 2^{ème} structures qui ont été obtenues à l'issue du procédé de fabrication selon l'invention sont plus faibles que celles de l'aimant de référence qui, rappelons-le, correspondent aux propriétés intrinsèques des nano-bâtonnets de cobalt.

Afin d'améliorer les propriétés magnétiques de ces structures et qu'elles s'approchent ainsi de celles de l'aimant de référence, il serait possible de changer la nature du matériau ferromagnétique des plots, par exemple en utilisant un alliage de nickel et de fer (par exemple un permalloy) ou un alliage de cobalt, nickel, manganèse et phosphore. Cela permettrait de moduler l'induction magnétique rayonnée en jouant sur l'aimantation et la coercivité des plots.

En outre, les propriétés magnétiques de ces 1^{ère} et 2^{ème} structures étant amoindries par la présence des plots en nickel, la gravure de ces derniers permettrait de disposer des aimants permanents sans nickel et donc d'améliorer les propriétés magnétiques.

Enfin, il convient de noter que les plus faibles propriétés magnétiques des 1^{ère} et 2^{ème} structures en comparaison avec celles de l'aimant de référence s'expliquent également par les différences de forme.

En effet, le cycle d'hystérésis de l'aimant de référence correspond à une couche mince au vu de ses dimensions latérales. Le champ démagnétisant, c'est-à-dire le champ produit par l'aimant à l'intérieur de celui-ci, peut donc être considéré comme nul. On obtient alors les propriétés intrinsèques du matériau. En revanche, ce type de couche mince ne peut être considéré comme un aimant, car aucun champ n'est rayonné en dehors de la couche.

Dans le cas des 1^{ère} et 2^{ème} structures obtenues à l'issue du procédé de fabrication selon l'invention, l'échantillon n'est plus seulement soumis au champ magnétique appliqué par le magnétomètre, mais aussi à son propre champ démagnétisant. Ceci se traduit par une diminution de l'aimantation au sein de la structure, mais également par la génération d'un champ généré extérieur ; ce qui est parfaitement approprié et exploitable pour des MAGMEMS et des dispositifs magnéto-optiques.

### A - V- Evaluation des performances magnétiques des aimants permanents obtenus avec le procédé de fabrication selon l'invention

### A - V- a- Mesure de l'induction magnétique par microsonde de Hall

L'induction magnétique générée par les 1^{ère} et 2^{ème} structures a été mesurée à l'aide d'un capteur de champ magnétique.

Plus précisément, une microsonde à effet Hall a été instrumentée à l'aide d'un montage électronique et d'une carte d'acquisition NI-6341. Ce capteur magnétique fonctionne ainsi grâce à l'effet Hall. Une paire d'électrode est polarisée de façon continue. La présence d'un champ magnétique perpendiculaire à la surface de la croix de Hall dévie une partie des charges, créant une différence de potentiel mesurée au niveau de la deuxième paire d'électrode. La croix de Hall a une largeur de 10 µm, ce qui permet de réaliser une mesure locale de l'induction magnétique générée par les aimants permanents.

Les mesures réalisées sont des profils d'induction magnétique, c'est-à-dire que l'aimant a été approché (jusqu'à une centaine de micromètres) de la microsonde, à l'aide d'une platine de déplacement, au niveau du centre de l'aimant permanent, c'est-à-dire à la position où l'induction magnétique est maximale. Puis, l'échantillon a été éloigné de la microsonde. Une valeur de l'induction magnétique a été récupérée grâce à un programme LabView pour chaque position.

### A - V- b - Actionnement de dispositifs résonnants MEMS

Les performances des 1^{ère} et 2^{ème} structures ont également été mesurées via leur capacité à actionner des dispositifs MEMS. Il s'agissait de résonateurs, en forme de bras de levier, qui vibrent grâce à la force de Lorentz issue du passage d'un courant alternatif perpendiculaire à un champ magnétique statique. Pour cela, l'aimant a été approché de ce MEMS jusqu'à une distance limite de la centaine de micromètres (pour éviter tout risque de détérioration).

Le MEMS utilisé consistait en un bras de levier de largeur 285 µm et de longueur 1430 µm.

La mesure de l'amplitude de résonance du MEMS a été réalisée grâce à des piézorésistances implantées à l'encastrement de la structure.

La déflexion du bras de levier engendre une variation de contrainte maximale à cet endroit. Celle-ci modifie la résistance de la piézorésistance, qui est convertie en tension et mesurée à l'aide d'un circuit électronique et d'une carte d'acquisition.

### A - V- c - simulation numérique

En outre, l'induction magnétique de ces 1^{ère} et 2^{ème} structures a été simulée grâce au logiciel Comsol Multiphysics, et ce en prenant en compte comme paramètres des fractions volumiques en cobalt de 25%, 30% et 50%.

La comparaison de l'évolution de la courbe de l'induction magnétique obtenue de manière expérimentale avec la microsonde à effet Hall sur les 1^{ère} et 2^{ème} structures avec celles des simulations obtenues avec différentes fractions volumiques en cobalt permet d'avoir une estimation de la fraction volumique en cobalt dans l'aimant permanent de la structure considérée. En effet, lorsque la courbe de l'induction magnétique obtenue de manière expérimentale d'une structure est proche d'une courbe de l'induction magnétique simulée avec une valeur donnée de la fraction volumique en cobalt, cela signifie que la fraction volumique en cobalt dans l'aimant permanent de cette structure est proche de cette valeur donnée.

Aussi, plus la fraction volumique en cobalt est importante, meilleures sont les propriétés magnétiques de l'aimant permanent de la structure. En particulier, une fraction volumique en cobalt de 50% est tout à fait avantageuse. C'est pourquoi, les valeurs des fractions volumiques de 25%, 30% et 50% en cobalt ont été choisies pour simuler l'induction magnétique.

### A-V-d-Résultats

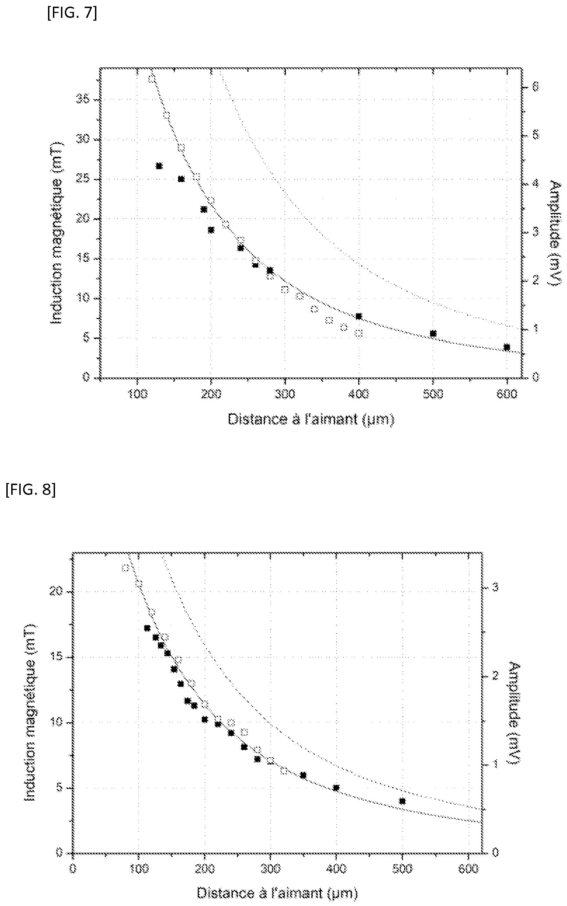

Sur la figure 7 sont représentées :
- l'évolution de l'induction magnétique de la 1^{ère} structure en fonction de la distance entre le centre de l'aimant 3a permanent et la microsonde (« carrés remplis en noir ») ;
- l'évolution simulée de l'induction magnétique de la 1^{ère} structure en prenant en compte une fraction volumique de 25 % de cobalt en fonction de la distance entre le centre de l'aimant 3a permanent et la microsonde (« courbe en continu ») ;
- l'évolution simulée de l'induction magnétique de la 1^{ère} structure en prenant en compte une fraction volumique de 50% de cobalt en fonction de la distance entre le centre de l'aimant 3a permanent et la microsonde (« courbe en points ») ;
- l'évolution de l'amplitude de vibration du résonateur MEMS avec la 1^{ère} structure en fonction de la distance entre le centre de l'aimant 3a permanent et le MEMS (« carrés avec contour noir »).

Sur la figure 8 sont représentées :
- l'évolution de l'induction magnétique de la 2^{ème} structure en fonction de la distance entre le centre de l'aimant 3b permanent et la microsonde (« carrés remplis en noir ») ;
- l'évolution simulée de l'induction magnétique de la 2^{ème} structure en prenant en compte une fraction volumique de 30 % de cobalt en fonction de la distance entre le centre de l'aimant 3b permanent et la microsonde (« courbe en continu ») ;
- l'évolution simulée de l'induction magnétique de la 2^{ème} structure en prenant en compte une fraction volumique de 50% de cobalt en fonction de la distance entre le centre de l'aimant 3a permanent et la microsonde (« courbe en points ») ;
- l'évolution de l'amplitude de vibration du résonateur MEMS avec la 2^{ème} structure en fonction de la distance entre le centre de l'aimant 3b permanent et le MEMS (« carrés avec contour noir »).

Au vu des figures 7 et 8, on relève que l'induction magnétique mesurée à 130 µm du centre de l'aimant est nettement plus importante pour la 1^{ère} structure comparée à celle de la 2^{ème} structures (26mT vs 16mT) et elle décroît pour atteindre une valeur similaire à 500 µm (5,5 mT contre 4mT).

En outre, ces valeurs sont plus faibles que celles attendues pour un aimant comprenant une fraction volumique de 50%. Cela peut s'expliquer par le fait qu'une quantité de l'anisole ne se soit pas évaporée complètement à l'issue du procédé de fabrication selon l'invention, ce qui a entraîné une porosité interne lors du séchage. Ceci peut se résoudre en utilisant d'autres solvants plus volatiles et en contrôlant la densification de l'aimant permanent, par exemple avec les paramètres de pression et température.

En outre, on relève que l'amplitude de vibration du résonateur MEMS décroît de la même façon que l'induction magnétique mesurée. Cela confirme que les aimants permanents en cobalt de ces 1^{ère} et 2^{ème} structures fournissent une énergie suffisante pour actionner des dispositifs MEMS.

La superposition des courbes d'induction magnétique (carrés remplis en noir) et celles d'amplitude de vibration (carrés avec contour noir) valide que l'actionnement est bien généré par la présence d'un aimant permanent.

### B : 2^{ème} série d'expérimentations :

### B- I - Réalisation de l'étape a) du procédé de fabrication selon l'invention :

### Préparation de nano-bâtonnets de cobalt :

Les nano-bâtonnets ont été préparés de la même manière que dans la partie A-I relative à la 1^{ère} série d'expérimentations.

3 mL de suspension ont été prélevés. A l'issue du lavage, les nano-bâtonnets de cobalt ont été redispersés dans 360 µL d'anisole, de manière à obtenir une solution d'anisole contenant des nano-bâtonnets de cobalt à une concentration molaire de 0,66 mol/L.

### Fabrication et fixation des plots sur un substrat :

On disposait d'un substrat qui était une plaquette de silicium carrée de 1 cm de côté et de 500 µm d'épaisseur.

160 plots en nickel ont été fixés sur la plaquette de silicium par électrodéposition. Une couche de titane d'une épaisseur de 50 nm, puis une couche de cuivre de 400 nm ont été déposées sur la plaquette de silicium par pulvérisation.

Ensuite, une couche d'épaisseur d'environ 30 µm de la résine commercialisée sous la dénomination commerciale AZ^{®} 40 XT par la société MicroChemicals GmbH qui est une résine photorésistante a été déposée par tournette sur la couche de cuivre.

La résine a été insolée par photolithographie et développée afin d'obtenir des puits correspondants à deux rectangles :
- d'une largeur « l » de 100 µm,
- d'une longueur « L₁ » de 100 µm,
- espacés d'une distance « d » de 100 µm.

Ensuite, du nickel a été électrodéposé au sein de ces deux rectangles, et ce avec la même épaisseur que la résine.

La résine a été retirée avec un bain d'acétone.

Le cuivre et le titane situés à l'extérieur des deux rectangles ont été gravés dans un mélange d'eau oxygénée (dilué à 1% en volume dans de l'eau déionisée) et d'acide sulfurique dilué à 1% en volume dans de l'eau déionisée.

On a ainsi obtenu une plaquette de silicium (à savoir le substrat) sur laquelle sont fixés 160 plots en nickel de forme parallélépipédique par l'intermédiaire d'une couche d'accroche constituée de la superposition de la couche de titane de 50 nm d'épaisseur et de la couche de cuivre de 400 nm.

Chaque plot était de forme parallélépipédique avec une base carrée de 100 µm de côté et une épaisseur de 24 µm.

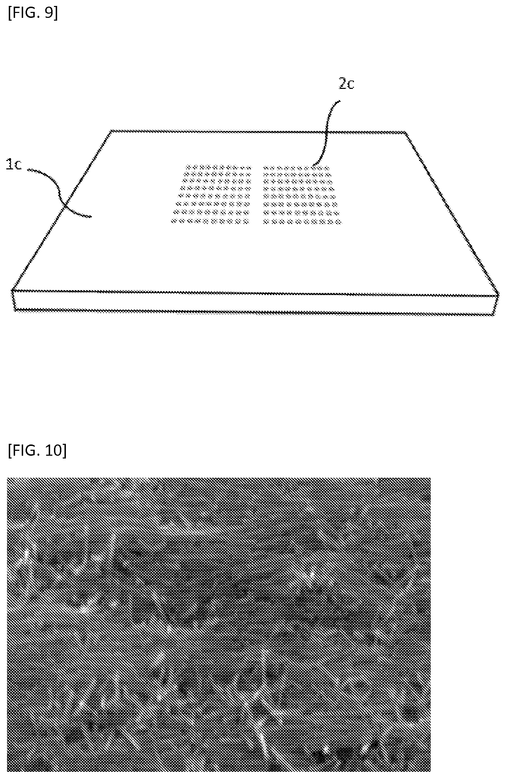

La figure 9 représente de manière schématique et en perspective la plaquette silicium 1c sur laquelle sont fixés 160 plots 2c en nickel.

Plus précisément, les plots 2c sont répartis sur la plaquette de silicium en deux colonnes espacées l'une de l'autre de 500 µm. Chaque colonne comprend 8 rangées de 10 plots 2c qui sont espacés les uns des autres sur chaque rangée de 100 µm. Chaque rangée de plots est espacée de 500 µm.

### B- II - Réalisation des étapes b) à e) du procédé de fabrication selon l'invention:

Les étapes b) à e) ont été réalisées de la même manière que dans la 1^{ière} série d'expérimentations comme cela est détaillé dans la partie A-II ci-dessus et ont été répétées deux fois.

On a ainsi obtenu des aimants permanents entre les plots de nickel selon la direction du champ magnétique qui a été appliqué.

### B -III - Prises de vues et mesures profilométriques :

La figure 10 est une photographie effectuée au MEB avec le même appareillage décrit ci-dessus à l'issue du procédé de fabrication selon l'invention avec un grossissement de 50 000 fois qui a été prise au niveau d'un des aimants permanents ainsi obtenus.

Sur cette photographie on discerne les nano-bâtonnets de cobalt et l'on constate qu'ils sont correctement alignés.

Des mesures profilométriques ont été effectuées avec un profilomètre mécanique tel que décrit dans la 1^{ère} série d'expérimentations.

Ces mesures ont ainsi été réalisées sur la largeur de deux plots de nickel de deux rangées consécutives et la largeur des deux aimants permanents obtenus à l'issue du procédé de fabrication à partir de ces deux plots.

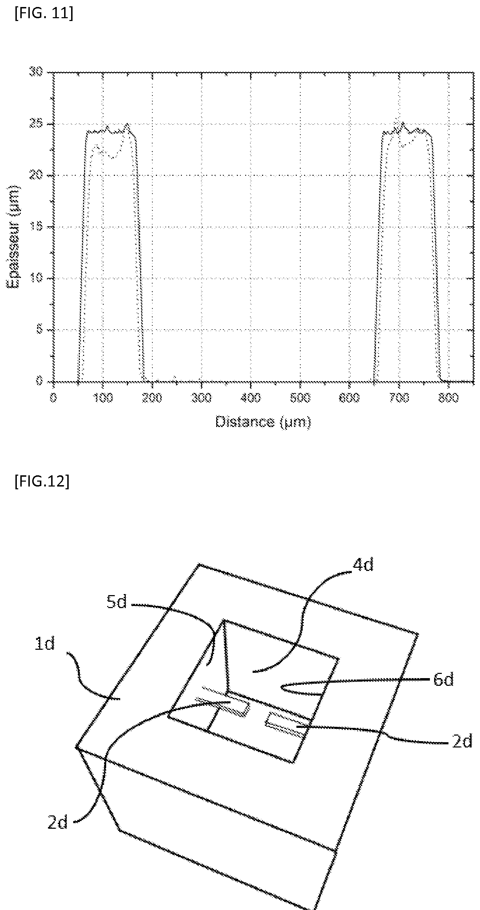

La figure 11 est un graphe représentant les évolutions de :
- la hauteur des deux plots en nickel en fonction de la distance mesurée à partir d'une distance de 50 µm de l'extrémité d'un de ces plots (courbe continu) ;
- la hauteur des deux aimants permanents en fonction de la distance mesurée à partir d'une distance de 50 µm de l'extrémité d'un de ces aimants (courbe en pointillés).

Au vu de la figure 11, on relève que l'allure des profils des deux aimants permanents est similaire à celles des plots en nickel. On note une très légère diminution de la largeur des deux aimants permanents par rapport aux plots en nickel (90 µm versus 100 µm) tandis que l'épaisseur de l'aimant permanent est quasiment identique à celle des plots en nickel (23 µm versus 24 µm).

### C : 3^{ème} série d'expérimentations :

### C - I - Réalisation de l'étape a) du procédé de fabrication selon l'invention :

### Préparation de nano-bâtonnets de cobalt :

Les nano-bâtonnets ont été préparés de la même manière que dans la partie A-I relative à la 1^{ère} série d'expérimentations.

A l'issue du lavage, les nano-bâtonnets de cobalt ont été redispersés dans 2,5 mL de chloroforme, de manière à obtenir une solution de chloroforme contenant des nano-bâtonnets de cobalt une concentration molaire de 0,13 mol/L.

### Fabrication et fixation des plots sur un substrat :

Comme cela est représenté sur la figure 12 de manière schématique et en perspective, on disposait d'un substrat 1d qui était un moule en PTFE au centre duquel était ménagée une cavité 4d.

Le substrat 1d présente une forme générale parallélépipédique de longueur 2 cm, de largeur 2 cm et de hauteur 2 cm au centre duquel est ménagée une cavité 4d de forme générale parallélépipédique dont les dimensions sont les suivantes : longueur 1 cm, largeur 1 cm et hauteur 1 cm.

La cavité 4d présente une 1^{ère} face 5d en regard d'une 2^{ème} face 6d.

Sur la 1^{ère} face 5d est fixé un 1^{er} plot 2d qui se présente sous la forme d'un barreau en acier de forme cylindrique de diamètre 1 500 µm et de longueur 6 mm.

Sur la 2^{ème} face 6d est fixé un 2^{ème} plot 2d qui se présente sous la forme d'un barreau en acier de forme cylindrique de diamètre 1500 µm et de longueur 6 mm.

Les extrémités libres des deux plots 2d sont distantes de 2 mm.

Les deux barreaux en acier sont encastrés dans le substrat 1d.

### C- II - Réalisation des étapes b) à e) du procédé de fabrication selon l'invention:

Le substrat 1d (à savoir le moule en PTFE) avec les deux barreaux en acier 2d a été placé dans un électroaimant.

1,2 mL de la solution de chloroforme contenant des nano-bâtonnets de cobalt une concentration molaire de 0,13 mol/L a été déposée au sein de la cavité 4d de manière à immerger totalement les deux barreaux en acier 2d.

Ensuite, un champ magnétique de 1 T a été appliqué. Après 2 minutes, le chloroforme en excès a été retiré via une seringue, sous champ magnétique.

Le champ magnétique a été stoppé après une heure permettant au résidu de chloroforme de s'évaporer en totalité.

L'aimant permanent ainsi obtenu a été récupéré à l'aide d'une pince en ayant préalablement retiré un des barreaux en acier.

Il présentait une forme cylindrique de longueur de 2 mm. Son diamètre est quasi-constant : aux extrémités de l'aimant permanent, il est de 1,3 mm et au centre, il est de 1,1 mm.

### C-III- Caractérisations magnétiques de l'aimant permanent :

Une mesure par magnétométrie a été réalisée afin de déterminer les propriétés magnétiques à température ambiante de l'aimant permanent obtenu avec le procédé de fabrication selon l'invention.

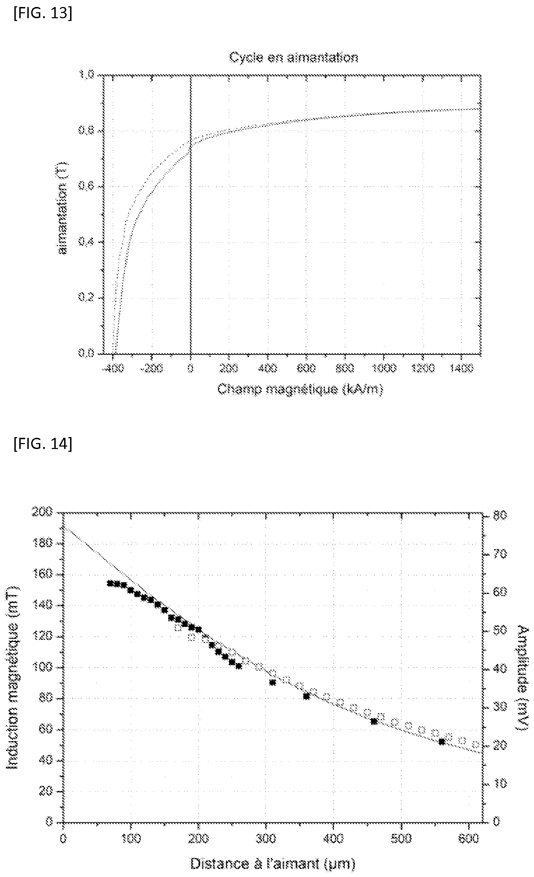

La figure 13 représente les courbes de désaimantation de :
- l'aimant permanent obtenu avec le procédé de fabrication selon l'invention (Courbe en continu) ;
- aimant de référence tel que décrit dans la 1^{ère} série d'expérimentations (Courbe en pointillés).

Le tableau 2 ci-dessous détaille les valeurs déterminées du champ coercitif H_{c} (en kA/m) et de l'aimantation rémanente µ₀Mᵣ (en mT) pour chacun de ces 2 aimants.

### [Tableau 2]

**Tableau 2 détaillant les propriétés magnétiques des aimants obtenus avec le procédé de fabrication selon l'invention et de référence**

| | µ₀Mᵣ (mT) | Hc (kA/m) |
|---|---|---|
| aimant permanent selon l'invention | 745 | 382 |
| aimant de référence | 768 | 400 |

Les valeurs du champ coercitif H_{c} (en kA/m) et de l'aimantation rémanente µ₀Mᵣ (en mT) de l'aimant de référence sont légèrement différentes de celles de l'aimant de référence de la 1^{ère} série d'expérimentations. Cela s'explique par les variations intrinsèques de la nature des nanobâtonnets de cobalt mis en œuvre, ainsi que par les variations de leur alignement pour obtenir les aimants de référence lors de ces 1^{ère} et 2^{ème} séries d'expérimentations.

La chute de l'aimantation rémanente (de 768 mT à 745 mT) et du champ coercitif (de 400 kA/m à 382 kA/m) entre l'aimant de référence et l'aimant permanent obtenu avec le procédé de fabrication selon l'invention est faible. Elle s'explique uniquement par la prise en compte du champ démagnétisant dans l'aimant permanent selon l'invention, qui baisse son aimantation, mais qui permet la génération d'un champ magnétique à l'extérieur de celui-ci.

### C - IV- Evaluation des performances magnétiques des aimants permanents obtenus avec le procédé de fabrication selon l'invention

Sur la figure 14 sont représentées :
- l'évolution de l'induction magnétique de l'aimant permanent en fonction de la distance entre le centre de l'aimant permanent et la microsonde (« carrés remplis en noir ») ;
- l'évolution simulée de l'induction magnétique de l'aimant permanent en fonction de la distance entre le centre de l'aimant permanent et la microsonde (« courbe en continu ») ;
- l'évolution de l'amplitude de vibration du résonateur MEMS avec l'aimant permanent en fonction de la distance entre le centre de l'aimant permanent et le MEMS (« carrés avec contour noir »).

Au vu de la figure 14, on relève que l'aimant permanent présente une induction magnétique de 155 mT à 70 µm et atteint 52 mT à 560 µm.

Ces valeurs sont plus élevées que celles obtenues sur les 1^{ère} et 2^{ème} structures de la 1^{ère} série d'expérimentations. En effet, l'augmentation de la taille de l'aimant permanent permet de diminuer la décroissance de l'induction magnétique à la sortie de l'aimant.

De plus, à la différence des 1^{ère} et 2^{ème} structures, les mesures ont réalisées pour cet aimant permanent en l'absence d'élément ferromagnétique doux (à savoir les plots) qui diminue l'aimantation de l'aimant permanent.

La superposition des courbes d'induction magnétique (carrés remplis en noir) et celles d'amplitude de vibration (carrés avec contour noir) valide que l'actionnement est bien généré par la présence d'un aimant permanent.

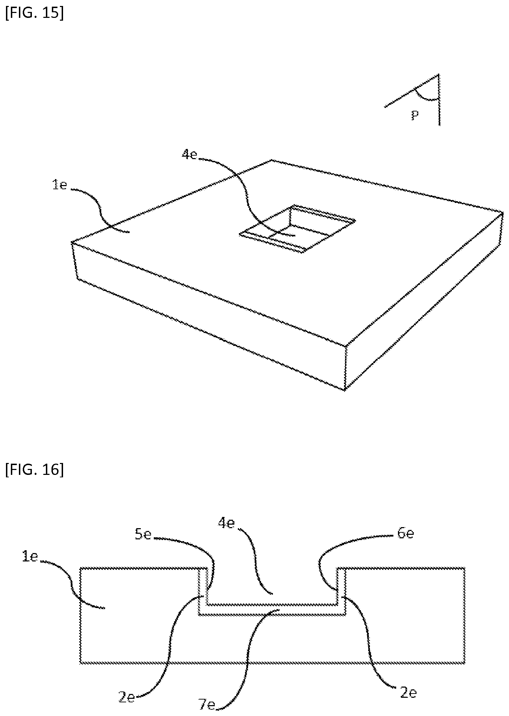

La figure 15 représente de manière schématique et en perspective un substrat 1e qui est une plaquette de silicium de forme parallélépipédique. Au sein de cette plaquette 1e est ménagée une cavité 4e.

La figure 16 est une vue en coupe selon le plan P de la figure 15 du substrat 1e. Sur la figure 16, la 1^{ère} face 5e et la 2^{ème} face 6e, la face du fond 7e de la cavité 4e, ainsi que deux plots 2e en nickel sont visibles. Les deux plots 2e en nickel ont été obtenus par électrodéposition d'une couche de nickel sur la 1^{ère} face 5e, la 2^{ème} face 6e et la face du fond 7e de la cavité 4e.

Le procédé de fabrication selon l'invention peut également être mis en œuvre avec ce substrat 1e qui présente une cavité au sein de laquelle sont fixés deux plots 2e. Pour ce faire, une solution contenant un ensemble d'objets qui portent un moment magnétique peut être déposée au sein de la cavité de manière à immerger totalement ou en partie les deux plots 2e qui présentent deux faces en regard. Ensuite, un champ magnétique homogène est appliqué de manière à regrouper les objets qui portent un moment magnétique entre ces deux plots 2e et à les orienter selon la direction du champ magnétique.

### D : 4^{ième} série d'expérimentations :

### D - I - Réalisation de l'étape a) du procédé de fabrication selon l'invention : Préparation de nanoparticules sphériques de carbure de fer

Des nanoparticules de carbure de fer Fe2.2C sont synthétisées comme reporté dans [S. S. Kale et al., "Iron carbide or iron carbide/cobalt nanoparticles for magnetically-induced CO2 hydrogenation over Ni/SiRAlOx catalysts," Catal. Sci. Technol., vol. 9, no. 10, pp. 2601-2607, 2019]. Elles sont sphériques et présentent un diamètre de 15 nm.

80 mg de de nanoparticules de carbure de fer ont été obtenus à partir du procédé de synthèse. 20 mg ont été prélevés à la spatule et ont été dispersés dans 1 mL d'anisole, ce qui correspond à une concentration molaire d'environ 3 mol/L.

### 1^{ère} forme de réalisation des plots :

Dans cette 1^{ère} forme de réalisation des plots, on disposait d'une plaquette de silicium présentant un réseau de plots en nickel. Chaque plot présentait une forme parallélépipédique de dimensions suivantes : une largeur de 100 µm, une longueur de 100 µm et une hauteur de 25 µm ; les plots étaient espacés d'une distance de 100 µm.

La plaquette de silicium a été lavée à l'éthanol et à l'acétone, séchée avec un flux d'azote puis a été déposée au fond d'un moule en PTFE.

### 2^{ième} forme de réalisation des plots :

Dans cette 2^{ième} forme de réalisation des plots, on disposait d'une plaquette de silicium présentant deux plots en nickel en vis-à-vis. Chacun des deux plots présentait une forme parallélépipédique de dimensions suivantes : une largeur de 500 µm, une longueur de 200 µm et une hauteur de 150 µm ; les deux plots étaient espacés d'une distance de 100 µm.

La plaquette de silicium a été lavée à l'éthanol et à l'acétone, séchée avec un flux d'azote puis a été déposée au fond d'un moule en PTFE.

### D - II - Réalisation des étapes b) à e) du procédé de fabrication selon l'invention :

Le moule en PTFE avec la plaquette en silicium portant la 1^{ère} forme de réalisation des plots a été placé dans un électroaimant qui est utilisé pour des expériences de résonance paramagnétique électronique et qui peut générer un champ magnétique statique dont l'intensité peut varier entre 0 T et 1 T.

Ensuite, on a répété 2 fois de suite l'enchaînement des étapes b) à d) du procédé de fabrication, et ce de la manière suivante :
- à l'étape b), on a déposé 10 µL de la solution d'anisole contenant les nanoparticules de carbure de fer à une concentration molaire de 3 mol/L sur la plaquette de silicium.
- à l'étape c), un champ magnétique de 1 T orienté selon une direction parallèle à la longueur des plots a été appliqué pendant 5 minutes. Au cours de cette étape c), une partie de l'anisole s'est évaporée.
- à l'étape d), on a effectué un lavage de la plaquette de silicium avec 500 µL de chloroforme qu'on a injecté dans le moule par flux latéral de manière à éliminer l'anisole en excès qui ne s'est pas évaporé au cours de l'étape c) et les nanoparticules de carbure de fer qui ne se sont pas alignées entre deux plots de nickel.

Avant chaque nouvelle répétition (c'est-à-dire avant chaque nouvelle mise en œuvre de l'étape b), l'intensité du champ magnétique a été ramenée à 0 T.

Puis, à l'issue de ces 2 répétitions des étapes b) à d), afin d'évaporer la totalité de l'anisole, on a appliqué un champ magnétique de 1 T pendant 15 min.

On a ainsi obtenu une 1^{ère} structure d'un réseau « plots de nickel/aimants doux en carbure de fer/plots de nickel ».

Les manipulations décrites ci-dessus ont été effectuées de manière identique pour la plaquette de silicium portant la 2^{ième} forme de réalisation des plots, à la différence près que l'enchaînement des étapes b) à d) du procédé de fabrication a été répété 8 fois de suite.

On a ainsi obtenu une 2^{ième} structure « plot de nickel/aimant doux en carbure de fer/plot de nickel ».

### D - III - Prises de vues de la 1^{ère} structure réseau « plots de nickel/aimants doux en carbure de fer/plots de nickel »

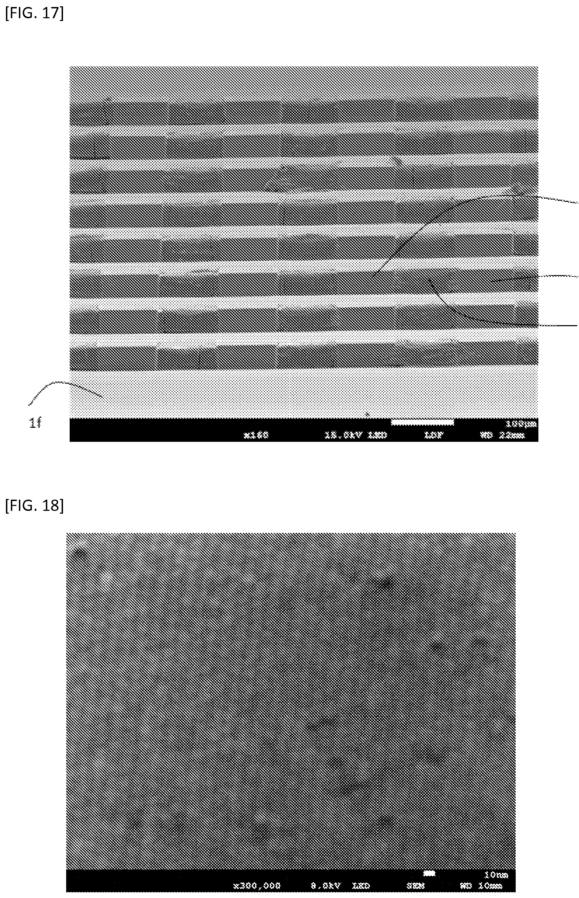

La figure 17 est une photographie effectuée au MEB de la 1ère structure réseau « plots de nickel/aimants doux en carbure de fer/plots de nickel » obtenue à l'issue du procédé de fabrication selon l'invention tel que décrit ci-dessus. Cette photographie a été prise avec un grossissement de 160 fois avec un MEB commercialisé par la société JEOL sous la dénomination commerciale JSM-7800 F.

Sur la figure, on distingue la plaquette de silicium 1f, les parallélépipèdes réguliers correspondant aux plots de nickel 2f de hauteur 25 µm, de largeur 100 µm et séparés d'une distance de 100 µm. On voit également que l'ensemble de l'espace inter_plots est rempli d'aimants doux 3c constitués de nanoparticules de carbure de fer, chaque aimant doux 3c ayant une hauteur conforme à la hauteur des plots de nickel 2f.

La figure 18 est une photographie effectuée au MEB d'un aimant doux 3c situé entre deux plot de nickel de la 1ère structure réseau « plots de nickel/aimants doux en carbure de fer/plots de nickel » de la figure 17. Cette photographie a été prise avec un grossissement de 300 000 fois avec un MEB commercialisé par la société JEOL sous la dénomination commerciale JSM-7800 F.

Cette photographie montre l'organisation des nanoparticules de carbure de fer ainsi que leur forte compacité.

### D - IV - Caractérisation magnétique de la 2ième structure « plot de nickel/aimant doux en carbure de fer/plot de nickel »

Une mesure par magnétométrie a été réalisée afin de déterminer les propriétés magnétiques à température ambiante (300°K) de la 2ième structure « plot de nickel/aimant doux en carbure de fer/plot de nickel » obtenue à l'issue du procédé de fabrication selon l'invention tel que décrit ci-dessus.

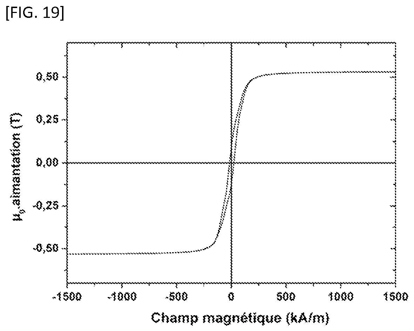

La figure 19 représente les cycles d'hystérésis en aimantation de cette 2ième structure « plot de nickel/aimant doux en carbure de fer/plot de nickel », après avoir enlevé les dépôts résiduels à l'extrémité des plots.

Un champ coercitif Hc de 17 kA/m est obtenu, montrant le caractère doux de cet aimant.

## Revendications

1. Procédé de fabrication d'un aimant permanent (3a,3b) ou doux (3c), comprenant au moins les étapes suivantes :
a) on dispose :
- d'une solution contenant au moins un solvant dans laquelle sont dispersés un ensemble d'objets qui portent un moment magnétique permanent ;
- d'un substrat (1a,1b,1c,1d,1e,1f) sur lequel sont fixés à la surface ou au sein d'une cavité (4d,4e) qu'il peut présenter au moins un 1^{er} plot (2a,2b,2c,2d,2e,2f) et un 2^{ème} plot (2a,2b,2c,2d,2e,2f) qui sont réalisés en un matériau ferromagnétique, ledit 1^{er} plot (2a,2b,2c,2d,2e,2f) comporte une face en regard d'une face que comporte le 2^{ème} plot (2a,2b,2c,2d,2e,2f), lesdites faces en regard étant parallèles entre elles;
b) on dépose la solution sur la surface du substrat (1a,1b,1c,1f) ou, le cas échéant, au sein de sa cavité (4d,4e), de telle sorte que les 1^{er} et 2^{ème} plots (2a,2b,2c,2d,2e,2f) sont au moins en partie immergés dans ladite solution ;
c) on place le substrat (1a,1b,1c,1d,1e,1f) dans un champ magnétique (B) orienté selon une direction perpendiculaire aux faces du 1^{er} plot et du 2^{ème} plot (2a,2b,2c,2d,2e,2f) qui sont en regard et parallèles entre elles de telle sorte qu'au moins une partie de l'ensemble des objets se regroupent de manière dense entre ladite face du 1^{er} plot (2a,2b,2c,2d,2e,2f) et ladite face du 2^{ème} plot (2a,2b,2c,2d,2e,2f) qui sont en regard et parallèles entres elles et que chacun de ces objets s'oriente selon la direction du champ magnétique (B) appliqué, de manière à former un aimant permanent (3a,3b) ou doux (3c);
d) optionnellement, on effectue au moins un lavage du substrat (1a,1b,1c,1d,1e,1f) avec au moins un solvant ;
e) optionnellement, on évapore totalement ou en partie le au moins un solvant de dispersion de l'ensemble d'objets et, le cas échéant, le au moins un solvant de lavage.

2. Procédé de fabrication selon la revendication 1, **caractérisé en ce que** les objets qui portent un moment magnétique permanent sont réalisés en un métal choisi parmi le cobalt, le fer, le nickel, les carbures de ces métaux, les nitrures de ces métaux, pris seuls ou en mélange de ceux-ci, ou des mélanges de fer et de platine ou de cobalt et de platine.

3. Procédé de fabrication selon la revendication 1 ou 2, **caractérisé en ce que** les objets sont des nano-objets.

4. Procédé de fabrication selon la revendication 3, **caractérisé en ce que** lesdits objets sont des nano-bâtonnets de cobalt et l'aimant est un aimant permanent.

5. Procédé de fabrication selon la revendication 3, **caractérisé en ce que** lesdits objets sont des nanoparticules sphériques de carbure de fer et l'aimant est un aimant doux.

6. Procédé de fabrication selon l'une quelconque des revendications 1 à 5, **caractérisé en ce que** le solvant dans lequel sont dispersés l'ensemble d'objets qui portent un moment magnétique permanent est choisi parmi l'anisole, le chloroforme, le toluène, le chlorobenzène et le mésitylène, pris seul ou en mélanges de ceux-ci.

7. Procédé de fabrication selon l'une quelconque des revendications 1 à 6, **caractérisé en ce que** la concentration des objets qui portent un moment magnétique permanent dans la solution est comprise entre 5.10¹⁵ objets/L et 10¹⁸ objets/L.

8. Procédé de fabrication selon l'une quelconque des revendications 1 à 7, **caractérisé en ce que** le substrat (1a,1b,1c,1d,1e,1f) est réalisé en un matériau choisi parmi le silicium, le verre, les polymères non solubles dans les solvants organiques, les métaux et la silice.

9. Procédé de fabrication selon l'une quelconque des revendications 1 à 8, **caractérisé en ce que** les plots (2a,2b,2c,2d,2e,2f) sont réalisés en un matériau ferromagnétique choisi parmi le nickel, le cobalt, l'acier, les alliages de nickel et de fer, les alliages de fer et de cobalt, les alliages de fer et de platine, les alliages de cobalt et de platine, les alliages de nickel et de fer et les alliages de nickel, cobalt, manganèse et phosphore, pris seul ou en mélange de ceux-ci.

10. Procédé de fabrication selon l'une quelconque des revendications 1 à 9, **caractérisé en ce que** les plots (2a,2b,2c) sont fixés à la surface du substrat (1a,1b,1c) et **en ce que** :
- le substrat (1a,1b,1c) présente une base dont l'aire est comprise entre 4 mm² et 2 500 cm² et une hauteur mesurée à partir de cette base comprise entre 10 µm et 10 cm,
- les plots (2a,2b,2c) présentent une base qui est fixée à la surface du substrat (1a,1b,1c) et dont l'aire est comprise entre 50 µm² et 1 cm² et une hauteur mesurée à partir de cette base comprise entre 10 µm et 1 mm,
- les deux faces en regard et parallèles entre elles des deux plots (2a,2b,2c) sont distantes d'une distance comprise entre 10 µm et 1 cm.

11. Procédé de fabrication selon la revendication 10, **caractérisé en ce que** le substrat (1a,1b,1c) comprend entre 2 et 100 plots (2a,2b,2c), chaque plot présentant au moins une face en regard d'une face d'un autre plot (2a,2b,2c), lesdites faces en regard étant toutes parallèles entre elles.

12. Procédé de fabrication selon l'une quelconque des revendications 1 à 9, **caractérisé en ce que** les plots sont fixés au sein d'une cavité (4d) que présente le substrat (1d) et **en ce que** :
- le substrat (1d) présente une base dont l'aire est comprise entre 1 mm² et 100 cm² et une hauteur mesurée à partir de cette base comprise entre 1 mm et 10 cm,
- le substrat (1d) présente au moins une cavité (4d) dont le volume est compris entre 1 mm³ et 500 cm³ et une profondeur comprise entre 1 mm et 10 cm,
- les plots (2d) présentent une base qui est en contact avec le substrat (1d) dont l'aire est comprise entre 0,01 mm² et 1000 mm² et une hauteur mesurée à partir de cette base comprise entre 100 µm et 5 mm,
- les deux faces en regard et parallèles entre elles des deux plots (2d) sont distantes d'une distance comprise entre 100 µm et 10 mm.

13. Procédé de fabrication selon la revendication 12, **caractérisé en ce que** le substrat (1d) est réalisé en polytétrafluoroéthylène et les plots (2d) ont une forme cylindrique avec une base présentant la forme d'un disque qui est fixée sur le substrat (1d) au sein de sa cavité (4d), lesdits plots (2d) sont réalisés en acier.

14. Procédé de fabrication selon l'une quelconque des revendications 1 à 9, **caractérisé en ce que** les plots (2e) sont fixés au sein d'une cavité (4e) que présente le substrat (1e) et **en ce que** :
- le substrat (1e) présente une base dont l'aire est comprise entre 4 mm² et 2 500 cm² et une hauteur mesurée à partir de cette base comprise entre 10 µm et 10 cm,
- le substrat (1e) présente au moins une cavité (4e) dont le volume est compris entre 500 µm³ et 100 mm³ et une profondeur comprise entre 10 µm et 1 mm,
- au moins un 1^{er} plot (2e) étant fixé sur une 1^{ère} face (5e) de la cavité (4e) et comporte une face en regard et parallèle à une face d'un 2^{ème} plot (2e) fixé sur une 2^{ème} face (6e) de la cavité (4e),
- lesdits plots (2e) présentent une base qui est en contact avec le substrat (1e) dont l'aire est comprise entre 50 µm² et 1 cm² et une hauteur mesurée à partir de cette base comprise entre 10 µm et 1 mm,
- les deux faces en regard et parallèles entre elles des deux plots (2e) sont distantes d'une distance comprise entre 10 µm et 1 cm.

15. Procédé de fabrication selon l'une quelconque des revendications 1 à 14, **caractérisé en ce que** la hauteur de l'aimant permanent obtenu à l'issue dudit procédé de fabrication est comprise entre 10 µm et 1 mm.

16. Procédé de fabrication selon l'une quelconque des revendications 1 à 15, **caractérisé en ce qu'**à l'étape c), l'intensité du champ magnétique (B) est comprise entre 100 mT et 1 T.

## Patentansprüche

1. Verfahren zur Herstellung eines Permanentmagneten (3a, 3b) oder Weichmagneten (3c), umfassend mindestens die folgenden Schritte:
a) Bereitstellen:
- einer Lösung, die mindestens ein Lösungsmittel enthält, in dem eine Anordnung von Objekten, die ein permanentmagnetisches Moment tragen, dispergiert sind;
- eines Substrats (1a, 1b, 1c, 1d, 1e, 1f), auf dem an der Oberfläche oder innerhalb eines Hohlraums (4d, 4e), den es aufweisen kann, mindestens ein 1. Kontaktstück (2a, 2b, 2c, 2d, 2e, 2f) und ein 2. Kontaktstück (2a, 2b, 2c, 2d, 2e, 2f) befestigt sind, die aus einem ferromagnetischen Material hergestellt sind, wobei das 1. Kontaktstück (2a, 2b, 2c, 2d, 2e, 2f) eine Fläche aufweist, die einer Fläche gegenüberliegt, die das 2. Kontaktstück (2a, 2b, 2c, 2d, 2e, 2f) umfasst, wobei die gegenüberliegenden Flächen parallel zueinander sind;
b) Auftragen der Lösung auf die Oberfläche des Substrats (1a, 1b, 1c, 1f) oder gegebenenfalls innerhalb seines Hohlraums (4d, 4e), so dass die 1. und 2. Kontaktstücke (2a, 2b, 2c, 2d, 2e, 2f) mindestens teilweise in die Lösung eingetaucht sind;
c) Platzieren des Substrats (1a, 1b, 1c, 1d, 1e, 1f) in einem Magnetfeld (B), das in einer Richtung senkrecht zu den Flächen des 1. Kontaktstücks und des 2. Kontaktstücks (2a, 2b, 2c, 2d, 2e, 2f) ausgerichtet ist, die einander gegenüberliegen und parallel zueinander verlaufen, so dass sich mindestens ein Teil der Anordnung der Objekte dicht zwischen der Fläche des 1. Kontaktstücks (2a, 2b, 2c, 2d, 2e, 2f) und der Fläche des 2. Kontaktstücks (2a, 2b, 2c, 2d, 2e, 2f) gruppiert, die einander gegenüberliegen und parallel zueinander verlaufen, und dass sich jedes dieser Objekte entsprechend der Richtung des aufgebrachten Magnetfeldes (B) so ausrichtet, dass ein Permanentmagnet (3a, 3b) oder ein Weichmagnet (3c) gebildet wird;
d) optional Durchführen mindestens eines Waschens des Substrats (1a, 1b, 1c, 1d, 1e, 1f) mit mindestens einem Lösungsmittel;
e) optional vollständiges oder teilweises Verdampfen des mindestens einen Lösungsmittels zum Dispergieren der Anordnung von Objekten und gegebenenfalls des mindestens einen Waschlösungsmittels.

2. Herstellungsverfahren nach Anspruch 1, **dadurch gekennzeichnet, dass** die Objekte, die ein permanentmagnetisches Moment tragen, aus einem Metall gefertigt sind, das aus Kobalt, Eisen, Nickel, Karbiden dieser Metalle, Nitriden dieser Metalle, allein oder in Mischung aus diesen, oder Eisen-Platin- oder Kobalt-Platin-Mischungen ausgewählt ist.

3. Herstellungsverfahren nach Anspruch 1 oder 2, **dadurch gekennzeichnet, dass** die Objekte Nanoobjekte sind.

4. Herstellungsverfahren nach Anspruch 3, **dadurch gekennzeichnet, dass** die Objekte Kobalt-Nanostäbchen sind und der Magnet ein Permanentmagnet ist.

5. Herstellungsverfahren nach Anspruch 3, **dadurch gekennzeichnet, dass** die Objekte kugelförmige Nanopartikel aus Eisenkarbid sind und der Magnet ein Weichmagnet ist.

6. Herstellungsverfahren nach einem der Ansprüche 1 bis 5, **dadurch gekennzeichnet, dass** das Lösungsmittel, in dem die Anordnung von Objekten, die ein permanentmagnetisches Moment tragen, dispergiert sind, aus Anisol, Chloroform, Toluol, Chlorbenzol und Mesitylen, allein oder in Mischungen aus diesen, ausgewählt ist.

7. Herstellungsverfahren nach einem der Ansprüche 1 bis 6, **dadurch gekennzeichnet, dass** die Konzentration der Objekte, die ein permanentmagnetisches Moment tragen, in der Lösung zwischen 5,10¹⁵ Objekten/I und 10¹⁸ Objekten/I liegt.

8. Herstellungsverfahren nach einem der Ansprüche 1 bis 7, **dadurch gekennzeichnet, dass** das Substrat (1a, 1b, 1c, 1d, 1e, 1f) aus einem Material gefertigt ist, das aus Silizium, Glas, in organischen Lösungsmitteln nicht löslichen Polymeren, Metallen und Siliziumdioxid ausgewählt ist.

9. Herstellungsverfahren nach einem der Ansprüche 1 bis 8, **dadurch gekennzeichnet, dass** die Kontaktstücke (2a, 2b, 2c, 2d, 2e, 2f) aus einem ferromagnetischen Material gefertigt sind, das aus Nickel, Kobalt, Stahl, Nickel- und Eisenlegierungen, Eisen- und Kobaltlegierungen, Eisen- und Platinlegierungen, Kobalt- und Platinlegierungen, Nickel- und Eisenlegierungen und Nickellegierungen, Kobalt, Mangan und Phosphor, allein oder in einer Mischung aus diesen, ausgewählt ist.

10. Herstellungsverfahren nach einem der Ansprüche 1 bis 9, **dadurch gekennzeichnet, dass** die Kontaktstücke (2a, 2b, 2c) an der Oberfläche des Substrats (1a, 1b, 1c) befestigt sind und dass:
- das Substrat (1a, 1b, 1c) eine Basis, deren Gesamtfläche zwischen 4 mm² und 2 500 cm² beträgt, und eine von dieser Basis aus gemessene Höhe zwischen 10 µm und 10 cm aufweist,
- die Kontaktstücke (2a, 2b, 2c) eine Basis, die an der Oberfläche des Substrats (1a, 1b, 1c) befestigt ist und deren Gesamtfläche zwischen 50 µm² und 1 cm² beträgt, und eine von dieser Basis aus gemessene Höhe zwischen 10 µm und 1 mm aufweist,
- die beiden einander gegenüberliegenden und zueinander parallelen Flächen der beiden Kontaktstücke (2a, 2b, 2c) einen Abstand zwischen 10 µm und 1 cm haben.

11. Herstellungsverfahren nach Anspruch 10, **dadurch gekennzeichnet, dass** das Substrat (1a, 1b, 1c) zwischen 2 und 100 Kontaktstücke (2a, 2b, 2c) umfasst, wobei jedes Kontaktstück mindestens eine Fläche aufweist, die einer Fläche eines anderen Kontaktstücks (2a, 2b, 2c) gegenüberliegt, wobei die einander gegenüberliegenden Flächen alle parallel zueinander sind.

12. Herstellungsverfahren nach einem der Ansprüche 1 bis 9, **dadurch gekennzeichnet, dass** die Kontaktstücke innerhalb eines Hohlraums (4d) befestigt sind, den das Substrat (1d) aufweist, und dass:
- das Substrat (1d) eine Basis, deren Gesamtfläche zwischen 1 mm² und 100 cm² beträgt, und eine von dieser Basis aus gemessene Höhe zwischen 1 mm und 10 cm aufweist,
- das Substrat (1d) mindestens einen Hohlraum (4d), dessen Volumen zwischen 1 mm³ und 500 cm³ beträgt, und eine Tiefe zwischen 1 mm und 10 cm aufweist,
- die Kontaktstücke (2d) eine Basis, die mit dem Substrat (1d) in Kontakt ist, dessen Gesamtfläche zwischen 0,01 mm² und 1000 mm² beträgt, und eine von dieser Basis aus gemessene Höhe zwischen 100 µm und 5 mm aufweisen,
- die beiden einander gegenüberliegenden und zueinander parallelen Flächen der beiden Kontaktstücke (2d) einen Abstand zwischen 100 µm und 10 mm haben.

13. Herstellungsverfahren nach Anspruch 12, **dadurch gekennzeichnet, dass** das Substrat (1d) aus Polytetrafluorethylen gefertigt ist und die Kontaktstücke (2d) eine zylindrische Form mit einer Basis in Form einer Scheibe aufweisen, die auf dem Substrat (1d) innerhalb seines Hohlraums (4d) befestigt ist, wobei die Kontaktstücke (2d) aus Stahl gefertigt sind.

14. Herstellungsverfahren nach einem der Ansprüche 1 bis 9, **dadurch gekennzeichnet, dass** die Kontaktstücke (2e) innerhalb eines Hohlraums (4e) befestigt sind, den das Substrat (1e) aufweist, und dass:
- das Substrat (1e) eine Basis, deren Gesamtfläche zwischen 4 mm² und 2 500 cm² beträgt, und eine von dieser Basis aus gemessene Höhe zwischen 10 µm und 10 cm aufweist,
- das Substrat (1e) mindestens einen Hohlraum (4e), dessen Volumen zwischen 500 µm³ und 100 mm³ beträgt, und eine Tiefe zwischen 10 µm und 1 mm aufweist,
- mindestens ein 1. Kontaktstück (2e) an einer 1. Fläche (5e) des Hohlraums (4e) befestigt ist und eine Fläche umfasst, die einer Fläche eines 2. Kontaktstücks (2e), das an einer 2. Fläche (6e) des Hohlraums (4e) befestigt ist, gegenüberliegt und parallel zu dieser ist,
- die Kontaktstücke (2e) eine Basis, die mit dem Substrat (1e) in Kontakt ist, dessen Gesamtfläche zwischen 50 µm² und 1 cm² beträgt, und eine von dieser Basis aus gemessene Höhe zwischen 10 µm und 1 mm aufweisen,
- die beiden einander gegenüberliegenden und zueinander parallelen Flächen der beiden Kontaktstücke (2e) einen Abstand zwischen 10 µm und 1 cm haben.

15. Herstellungsverfahren nach einem der Ansprüche 1 bis 14, **dadurch gekennzeichnet, dass** die Höhe des nach Abschluss des Herstellungsverfahrens erhaltenen Permanentmagneten zwischen 10 µm und 1 mm beträgt.

16. Herstellungsverfahren nach einem der Ansprüche 1 bis 15, **dadurch gekennzeichnet, dass** in Schritt c) die Stärke des Magnetfelds (B) zwischen 100 mT und 1 T liegt.

## Claims

1. A method for producing a permanent (3a, 3b) or soft (3c) magnet, comprising at least the following steps:
a) providing:
- a solution containing at least one solvent in which a set of objects which bear a permanent magnetic moment is dispersed;
- a substrate (1a, 1b, 1c, 1d, 1e, 1f) on which are fastened to the surface or within a cavity (4d, 4e) that it may comprise at least one first pad (2a, 2b, 2c, 2d, 2e, 2f) and a second pad (2a, 2b, 2c, 2d, 2e, 2f) which are made of a ferromagnetic material, said first pad (2a, 2b, 2c, 2d, 2e, 2f) include a face opposite a face of the second pad (2a, 2b, 2c, 2d, 2e, 2f), said opposite faces being parallel to each another;
b) depositing the solution on the surface of the substrate (1a, 1b, 1c, 1f) or, where applicable, within its cavity (4d, 4e), such that the first and second pads (2a, 2b, 2c, 2d, 2e, 2f) are at least partially immersed in said solution;
c) placing the substrate (1a, 1b, 1c, 1d, 1e, 1f) in a magnetic field (B) oriented in a direction perpendicular to the faces of the first pad and of the second pad (2a, 2b, 2c, 2d, 2e, 2f) which are opposite and parallel to each other, such that at least part of the set of objects becomes densely grouped between said face of the first pad (2a, 2b, 2c, 2d, 2e, 2f) and said face of the second pad (2a, 2b, 2c, 2d, 2e, 2f) which are opposite and parallel to each other, and each of said objects aligns with the direction of the applied magnetic field (B), so as to form a permanent (3a, 3b) or soft (3c) magnet;
d) optionally, performing at least one wash of the substrate (1a, 1b, 1c, 1d, 1e, 1f) with at least one solvent;
e) optionally, evaporating all or part of the at least one dispersion solvent of the set of objects and, where applicable, of the at least one washing solvent.

2. The production method according to claim 1, **characterized in that** the objects which bear a permanent magnetic moment are made of a metal selected from cobalt, iron, nickel, carbides of these metals, nitrides of these metals, taken alone or in combination thereof, or mixtures of iron and platinum or cobalt and platinum.

3. The production method according to claim 1 or 2, **characterized in that** the objects are nano-objects.

4. The production method according to claim 3, **characterized in that** said objects are cobalt nanorods and the magnet is a permanent magnet.

5. The production method according to claim 3, **characterized in that** said objects are spherical iron carbide nanoparticles and the magnet is a soft magnet.

6. The production method according to any one of claims 1 to 5, **characterized in that** the solvent in which the set of objects which bear a permanent magnetic moment is dispersed is selected from anisole, chloroform, toluene, chlorobenzene, and mesitylene, taken alone or in mixtures thereof.

7. The production method according to any one of claims 1 to 6, **characterized in that** the concentration of the objects which bear a permanent magnetic moment in the solution is comprised between 5.10¹⁵ objects/L and 10¹⁸ objects/L.

8. The production method according to any one of claims 1 to 7, **characterized in that** the substrate (1a, 1b, 1c, 1d, 1e, 1f) is made of a material selected from silicon, glass, polymers insoluble in organic solvents, metals, and silica.

9. The production method according to any one of claims 1 to 8, **characterized in that** the pads (2a, 2b, 2c, 2d, 2e, 2f) are made of a ferromagnetic material selected from nickel, cobalt, steel, nickel-iron alloys, iron-cobalt alloys, iron-platinum alloys, cobalt-platinum alloys, nickel-iron alloys, and nickel-cobalt-manganese-phosphorus alloys, used alone or in combination thereof.

10. The production method according to any one of claims 1 to 9, **characterized in that** the pads (2a, 2b, 2c) are fastened to the surface of the substrate (1a, 1b, 1c), and **in that**:
- the substrate (1a, 1b, 1c) has a base with an area comprised between 4 mm² and 2500 cm² and a height measured from this base comprised between 10 µm and 10 cm,
- the pads (2a, 2b, 2c) have a base which is fasten to the surface of the substrate (1a, 1b, 1c) with an area comprised between 50 µm² and 1 cm² and a height measured from this base comprised between 10 µm and 1 mm,
- the two opposite and parallel faces of the two pads (2a, 2b, 2c) are separated by a distance comprised between 10 µm and 1 cm.

11. The production method according to claim 10, **characterized in that** the substrate (1a, 1b, 1c) comprises between 2 and 100 pads (2a, 2b, 2c), each pad having at least one face opposite a face of another pad (2a, 2b, 2c), said opposite faces all being parallel to each other.

12. The production method according to any one of claims 1 to 9, **characterized in that** the pads are fastened within a cavity (4d) formed in the substrate (1d), and **in that**:
- the substrate (1d) has a base with an area comprised between 1 mm² and 100 cm² and a height measured from this base comprised between 1 mm and 10 cm,
- the substrate (1d) has at least one cavity (4d) with a volume comprised between 1 mm³ and 500 cm³ and a depth comprised between 1 mm and 10 cm,
- the pads (2d) have a base which is in contact with the substrate (1d) with an area comprised between 0.01 mm² and 1000 mm² and a height measured from this base comprised between 100 µm and 5 mm,
- the two opposite and parallel faces of the two pads (2d) are separated by a distance comprised between 100 µm and 10 mm.

13. The production method according to claim 12, **characterized in that** the substrate (1d) is made of polytetrafluoroethylene and the pads (2d) have a cylindrical shape with a base in the form of a disk which is fastened to the substrate (1d) within its cavity (4d), said pads (2d) being made of steel

14. The production method according to any one of claims 1 to 9, **characterized in that** the pads (2e) are fastened within a cavity (4e) formed in the substrate (1e), and **in that**:
- the substrate (1e) has a base with an area comprised between 4 mm² and 2500 cm² and a height measured from this base comprised between 10 µm and 10 cm,
- the substrate (1e) has at least one cavity (4e) with a volume comprised between 500 µm³ and 100 mm³ and a depth comprised between 10 µm and 1 mm,
- at least one first pad (2e) being fastened to a first face (5e) of the cavity (4e) and includes a face opposite and parallel to a face of a second pad (2e) fasten to a second face (6e) of the cavity (4e),
- said pads (2e) have a base which is in contact with the substrate (1e) with an area comprised between 50 µm² and 1 cm² and a height measured from this base comprised between 10 µm and 1 mm,
- the two opposite and parallel faces of the two pads (2e) are separated by a distance comprised between 10 µm and 1 cm.

15. The production method according to any one of claims 1 to 14, **characterized in that** the height of the permanent magnet obtained at the end of said production method is comprised between 10 µm and 1 mm.

16. The production method according to any one of claims 1 to 15, **characterized in that**, at step c), the intensity of the magnetic field (B) is comprised between 100 mT and 1 T.
